# EUROPEAN PATENT APPLICATION

(11) **EP 4 202 337 A1**
(43) Date of publication of application: **28.06.2023**
(21) Application number: 21858517.2
(22) Date of filing: 09.08.2021
(51) Int. Cl.: F25D 31/00, F25D 29/00, F25D 23/12, F25D 17/06, F25D 15/00, A23B 4/06, A23L 3/32, A23L 3/36

(54) **REFRIGERATOR**

(30) Priority: 19.08.2020 KR 20200103916
(71) Applicant: LG ELECTRONICS INC., Yeongdeungpo-gu Seoul 07336 (KR)
(72) Inventor: CHOI, Heungsik, Seoul 08592 (KR)
(74) Representative: Vossius & Partner Patentanwälte Rechtsanwälte mbB
(86) International application number: PCT/KR2021/010521
(87) International publication number: WO 2022/039430

(57) **Abstract**

A refrigerator according to an embodiment of the present disclosure includes a first storage compartment, a cavity, a heat source, a cold source, a water molecule freezing preventing device, and a controller configured to control an output of at least one of the heat source, the cold source, or the water molecule freezing preventing device, wherein the controller is configured to perform a first operation step to operate based on the first notch temperature for a cooling operation, a second operation step to operate based on a second notch temperature for a heating operation, and a third operation step to operate based on a third notch temperature for the cooling operation, the second notch temperature is higher than 0°C, cold in the first storage chamber increases in the first operation step and the third operation step, and the cold decreases in the second operation step. Accordingly, it is possible to efficiently supply the cold or heat until reaching a supercooling maintenance section.

## Description

### BACKGROUND

### 1. Field

The present disclosure relates to a refrigerator, and more particularly, to a refrigerator capable of efficiently supplying cold or heat until reaching a supercooling maintaining section.

### 2. Description of the Related Art

For long term storage of meat, fish, and the like, a freezer compartment in a refrigerator maintains a temperature of approximately -18°C.

Meanwhile, when cooking meat, fish, etc. frozen at a temperature of approximately -18°C, separate thawing is required. Accordingly, after the frozen meat, fish, etc. are taken out, and the thawing operation is performed through a separate cooking utensil. However, there is an inconvenience in that a separate thawing operation is performed through another utensil.

Korean Patent Publication No. 10-2008-0003218 (hereinafter, referred to as "Prior Literature 1") discloses a supercooling apparatus including a non-freezer compartment for storing food in a non-freezing supercooling state and an electrode for applying an electric field to the non-freezer compartment.

However, according to the Prior Literature 1, the supercooling apparatus performs an operation as a heater when a current is applied, which increases an internal temperature to increase a temperature of a load maintained at a low temperature. On the other hand, when the current is not applied, the internal temperature decreases to a low temperature again. Thus, there is a problem in that a food storage period is not long because the temperature change is repeated.

In addition, a temperature increases occurs only around the heater due to the operation of the heater. Accordingly, there is a problem in that even temperature change does not occur in the load.

Korean Patent Registered Patent Publication No. 10-0756712 (hereinafter, referred to as "Prior Literature 2") a method for determining supercooling release of a refrigerator.

However, according to Prior Literature 2, in order to detect a temperature of an object, a temperature sensor that measures the temperature should be placed inside a supercooling chamber, so when using an electric field or magnetic field, malfunctions of the temperature sensor and a circuit element around the temperature sensor the surroundings thereof may occur. Therefore, there is a problem in that it is difficult to accurately detect the temperature of the object.

In addition, according to Prior Literature 2, there is no method for efficiently maintaining supercooling, so there is a disadvantage in that power consumption is considerable.

### SUMMARY

The present disclosure provides a refrigerator capable of efficiently supplying cold or heat until reaching a supercooling maintaining section.

The present disclosure further provides a refrigerator capable of efficiently maintaining supercooling using an RF signal without placing a temperature detector in a cavity.

The present disclosure further provides a refrigerator capable of efficiently supplying cold in a second supercooling section of a first supercooling section and the second supercooling section.

The present disclosure further provides a refrigerator capable of stably securing a supercooling section using an RF signal.

According to an embodiment of the present disclosure, there is provided a refrigerator including: a first storage compartment in which goods are stored; a cavity disposed inside the first storage compartment; a heat source configured to supply heat into the cavity; a cold source configured to supply cold into the cavity; a water molecule freezing preventing device configured to prevent freezing of water contained in the goods; and a controller configured to control an output of at least one of the heat source, the cold source, or the water molecule freezing preventing device.

The controller is configured to perform a first operation step to operate based on the first notch temperature for a cooling operation of the first storage compartment, a second operation step to operate based on a second notch temperature for a heating operation of the first storage compartment, and a third operation step to operate based on a third notch temperature for the cooling operation of the first storage compartment.

The second notch temperature is higher than 0°C, cold in the first storage compartment increases in the first operation step and the third operation step, and the cold decreases in the second operation step.

The cold source may include an evaporator configured to perform heat exchange using a refrigerant compressed by a compressor.

The cold source may include a fan operated to supply cold generated by the heat exchange in the evaporator to the first storage compartment.

The cold source may include a heat absorption surface of a thermoelectric element.

The cold source may further include a fan operated to supply cold generated by heat exchange on a heat absorption surface of the thermoelectric element to the cavity.

The heat source may include at least one of a heater or an RF output device.

The water molecule freezing preventing device may include at least one of an RF output device, an electric field output device, a magnetic field output device, or an ultrasonic output device.

An operation mode of the first storage compartment may be changed, and the operation mode may include at least one of a refrigerating operation mode, a supercooling operation mode, or a thawing mode.

A notch temperature of the first storage compartment in the refrigerating operation mode may be higher than a notch temperature of the first storage compartment in the supercooling operation mode.

A notch temperature of the first storage compartment in the refrigerating operation mode may be lower than a notch temperature of the first storage compartment in a heating operation mode.

The refrigerator may further include a second storage compartment disposed outside the first storage compartment

A notch temperature of the second storage compartment may be higher than a notch temperature for the cooling cooperation of the first storage compartment.

The refrigerator may further include a third storage compartment, and a notch temperature for the third storage compartment may be lower than the notch temperature for the cooling operation of the first storage compartment.

The controller may be configured to control an output of the water molecule freezing preventing device during execution of the second operation step to be greater than an output of the water molecule freezing preventing device during execution of the first operation step.

An output of the water molecule freezing preventing device during execution of the first operation step may be zero.

The controller may be configured to control an output of the water molecule freezing preventing device during execution of the third operation step to be equal to or greater than an output of the water molecule freezing preventing device during execution of the first operation step.

The controller may be configured to further perform a fourth operation step operated based on a fourth notch temperature for the heating operation of the first storage compartment.

The fourth notch temperature may be higher than 0°C.
the controller may be configured to control the fourth notch temperature to be higher than the second notch temperature when a time elapsed from a time when an operation start condition of the second operation step is satisfied to a time when an operation end condition of the second operation step is satisfied exceeds a predetermined range.

The controller may be configured to control the fourth notch temperature to be equal to the second notch temperature when the first operation when a time elapsed from a time when an operation start condition of the second operation step is satisfied to a time when an operation end condition of the second operation step is satisfied is within a predetermined range.

The controller may be configured to control the fourth notch temperature to be lower than the second notch temperature when a time elapsed from a time when an operation start condition of the second operation step is satisfied to a time when an operation end condition of the second operation step is satisfied is less than a predetermined range.

The controller is configured to control the fourth notch temperature to be higher than the second notch temperature when a temperature of the first storage compartment exceeds a predetermined range from a time when an operation start condition of the second operation step is satisfied to a time when an operation end condition of the second operation step is satisfied.

The controller may be configured to control the fourth notch temperature to be equal to the second notch temperature when a temperature of the first storage compartment is within a predetermined range from a time when an operation start condition of the second operation step is satisfied to a time when an operation end condition of the second operation step is satisfied.

The controller may be configured to control the fourth notch temperature to be lower than the second notch temperature when the temperature of the first storage compartment is less than the predetermined range from the time when the operation start condition of the second operation step is satisfied to the time when the operation end condition of the second operation step is satisfied.

According to further another embodiment of the present disclosure, there is provided a refrigerator including: a cavity which is disposed in a supercooling chamber and in which goods are placed, an inlet temperature detector configured to detect an inlet temperature of the cavity, an outlet temperature detector configured to detect an outlet temperature of the cavity, a cold supply device configured to supply or block cold to the cavity, a heat supply device configured to supply or block heat to the cavity, and a controller configured to control the cold supply device and the heat supply device.

The heat supply device includes an RF output device that outputs an RF signal into the cavity.

The controller may be configured to supply the cold to into the cavity during a first section, supply heat into the cavity during a second section after the first section when the supercooling state of the goods is released, supply the cold to the cavity, and supply the heat into the cavity during a third section after the second section when thawing of the goods ends.

The controller is configured to control cold in the first storage compartment increases in the first section and the third section, and the cold decreases in the second section.

During the first section, the temperature of the goods may sequentially decrease to the first temperature which is a supercooling set temperature, and during the second section, the temperature of the goods may increase from the first temperature to a second temperature which is a thawing completion temperature. Moreover, during the third section, the temperature of the goods may decrease from the second temperature to a third temperature higher than the first temperature.

The controller may be configured to supply the heat into the cavity using an RF signal output by operating the RF output device.

The controller may be configured to maintain the temperature of the goods within a predetermined range based on the third temperature during the fourth section after the third section.

The controller may be configured to supply the heat into the cavity and control the supply of the heat to be turned on or off repeatedly during the fourth section.

The controller may be configured to control a first heat supply period of the fourth second to be longer than the remaining heat supply periods.

The controller may be configured to control the cold decreases and is not supplied into the cavity during the second section.

The controller may be configured to supply heat having intensity less than the intensity of the heat during the second section to the cavity during the first section.

The controller may be configured to control a temperature change rate of the goods during the third section to be less than a temperature change rate of the goods during the first section.

The controller may be configured to control the intensity of the heat during the third section to be less than the intensity of the heat during the second section.

The cold supply device may include a fan placed at the inlet of the cavity.

The supercooling chamber may further include a partition wall separating an inlet of the supercooling chamber and an outlet of the supercooling chamber.

The controller may control the supply of the cold supplied to the cavity through on/off control of the fan.

The cold supply device may further include a cold supply duct configured to supply cold to the inlet of the supercooling chamber, and a damper configured to operate to supply the cold to the cold supply duct.

The controller may control the supply of cold supplied to the supercooling chamber by controlling an opening rate of a damper.

When the supercooling chamber is disposed in the refrigerating compartment, the cold supply device may further include a cold supply duct in a freezer compartment that supplies cold to the inlet of the supercooling chamber and a cold recovery duct in the freezer compartment that collects the cold from the outlet of the supercooling chamber.

The controller may determine that the supercooling state of the goods is released when a first change rate, which is the difference between the outlet temperature and the inlet temperature of the cavity during the operation of the fan, is equal to or more than a first reference value, and a second change rate, which is the difference between the outlet temperature and inlet temperature of the cavity when the fan is turned off, is equal to or more than a second reference value.

The controller may determine that the thawing of the goods ends when the difference between the outlet temperature and the inlet temperature of the cavity when the fan is off is greater than zero, and the second change rate, which is the difference between the outlet temperature and the inlet temperature of the cavity when the fan is off, is equal to or more than the second reference value.

According to further another embodiment of the present disclosure, there is provided a refrigerator including: a cavity which is disposed in a supercooling chamber and in which goods are placed, an inlet temperature detector configured to detect an inlet temperature of the cavity, an outlet temperature detector configured to detect an outlet temperature of the cavity, a cold supply device configured to supply or block cold to the cavity, an RF output device configured to output an RF signal into the cavity, and a controller configured to control the cold supply device and the heat supply device.

The controller may be configured to supply the cold into the cavity during a first section, supply the RF signal into the cavity during a second section after the first section when the supercooling state of the goods is released, supply the cold to the cavity, and supply the RF signal into the cavity during a third section after the second section when thawing of the goods ends.

The controller may be configured to control cold increases in the first section and the third section, and the cold decreases in the second section.

The controller may be configured to maintain the temperature of the goods within a predetermined range based on the third temperature and the supply of the RF signal is turned on or off repeatedly during the fourth section after the third section.

### EFFECTS OF THE DISCLOSURE

The controller of the embodiment of the present disclosure may be configured to perform the first operation step to operate based on the first notch temperature for the cooling operation of the first storage compartment, the second operation step to operate based on the second notch temperature for the heating operation of the first storage compartment, and the third operation step to operate based on the third notch temperature for the cooling operation of the first storage compartment. Accordingly, it is possible to effectively supply the cold or heat until reaching the supercooling maintaining section.

The controller is configured to control the second notch temperature to be higher than 0°C and the cold in the first storage compartment increases in the first operation step and the third operation step and the cold decreases in the second operation step. Accordingly, it is possible to effectively supply the cold or heat until reaching the supercooling maintaining section.

The operation mode of the first storage compartment may be changed, and the operation mode may include at least one of the refrigerating operation mode, the supercooling operation mode, or the thawing mode. Accordingly, it is possible to effectively supply the cold or heat until reaching the supercooling maintaining section.

The notch temperature of the first storage compartment in the refrigerating operation mode may be higher than the notch temperature of the first storage compartment in the supercooling operation mode. Therefore, it is possible to effectively supply the cold or heat until reaching the supercooling maintaining section.

The notch temperature of the first storage compartment in the refrigerating operation mode may be lower than the notch temperature of the first storage compartment in the heating operation mode. Therefore, it is possible to effectively supply the cold or heat until reaching the supercooling maintaining section.

The notch temperature of the second storage compartment may be higher than the notch temperature for the cooling cooperation of the first storage compartment. Therefore, it is possible to effectively supply the cold or heat until reaching the supercooling maintaining section.

The refrigerator according to the embodiment of the present disclosure may further include the third storage compartment, and the notch temperature for the third storage compartment may be lower than the notch temperature for the cooling operation of the first storage compartment. Therefore, it is possible to effectively supply the cold or heat until reaching the supercooling maintaining section.

The controller may be configured to control the output of the water molecule freezing preventing device during the execution of the second operation step to be greater than the output of the water molecule freezing preventing device during the execution of the first operation step. Therefore, in the first operation step, power consumption by the water molecule freezing preventing device can be reduced.

The output of the water molecule freezing preventing device during execution of the first operation step may be zero. Accordingly, the power consumption by the water molecule freezing preventing device can be reduced.

The controller may be configured to control the output of the water molecule freezing preventing device during the execution of the third operation step to be equal to or greater than the output of the water molecule freezing preventing device during the execution of the first operation step. Accordingly, in the operation section, the power consumption by the water molecule freezing preventing device can be reduced.

The controller may be configured to further perform the fourth operation step operated based on the fourth notch temperature for the heating operation of the first storage compartment. Therefore, the thawing mode can be performed.

The controller may be configured to control the fourth notch temperature to be higher than the second notch temperature when the time elapsed from the time when the operation start condition of the second operation step is satisfied to the time when the operation end condition of the second operation step is satisfied exceeds a predetermined range. Accordingly, it is possible to effectively supply the cold or heat until reaching the supercooling maintaining section.

The controller may be configured to control the fourth notch temperature to be equal to the second notch temperature when the first operation when the time elapsed from the time when the operation start condition of the second operation step is satisfied to the time when the operation end condition of the second operation step is satisfied is within a predetermined range. Accordingly, it is possible to effectively supply the cold or heat until reaching the supercooling maintaining section.

The controller may be configured to control the fourth notch temperature to be lower than the second notch temperature when the time elapsed from the time when the operation start condition of the second operation step is satisfied to the time when the operation end condition of the second operation step is satisfied is less than a predetermined range. Accordingly, it is possible to effectively supply the cold or heat until reaching the supercooling maintaining section.

The controller may be configured to control the fourth notch temperature to be higher than the second notch temperature when the temperature of the first storage compartment exceeds the predetermined range from the time when the operation start condition of the second operation step is satisfied to the time when the operation end condition of the second operation step is satisfied. Accordingly, it is possible to effectively supply the cold or heat until reaching the supercooling maintaining section.

The controller may be configured to control the fourth notch temperature to be equal to the second notch temperature when the temperature of the first storage compartment is within the predetermined range from the time when the operation start condition of the second operation step is satisfied to the time when the operation end condition of the second operation step is satisfied. Accordingly, it is possible to effectively supply the cold or heat until reaching the supercooling maintaining section.

The controller may be configured to control the fourth notch temperature to be lower than the second notch temperature when the temperature of the first storage compartment is less than the predetermined range from the time when the operation start condition of the second operation step is satisfied to the time when the operation end condition of the second operation step is satisfied. Accordingly, it is possible to effectively supply the cold or heat until reaching the supercooling maintaining section.

The controller in the refrigerator according to another embodiment of the present disclosure may be configured to execute the first operation step to operate based on the first notch temperature for the cooling operation of the first storage compartment, the second operation step to operate based on the second notch temperature for the heating operation of the first storage compartment, and the third operation step to operate based on the third notch temperature for the cooling operation of the first storage compartment. Accordingly, it is possible to effectively supply the cold or heat until reaching the supercooling maintaining section.

The controller is configured to control the output of the water molecule freezing preventing device in the third operation step to be greater than or equal to an output of the water molecule freezing preventing device in the first operation step. Accordingly, it is possible to effectively supply the cold or heat until reaching the supercooling maintaining section.

### BRIEF DESCRIPTION OF THE DRAWINGS

The above and other objects, features and advantages of the present disclosure will be more apparent from the following detailed description in conjunction with the accompanying drawings, in which:
FIG. 1 is a perspective view illustrating a refrigerator according to an embodiment of the present disclosure;
FIG. 2 is a perspective view of the refrigerator of FIG. 1 in which a door is opened;
FIG. 3 is a diagram schematically illustrating a configuration of the refrigerator of FIG. 1;
FIG. 4A is an example of a block diagram schematically illustrating an inside of the refrigerator illustrated in FIG. 1;
FIG. 4B is another example of a block diagram schematically illustrating the inside of the refrigerator illustrated in FIG. 1;
FIG. 5A is a diagram illustrating an example of an RF output device, which is an example of a heat supply device of FIG. 4A;
FIG. 5B is a diagram illustrating another example of an RF output device, which is an example of the heat supply device of FIG. 4A;
FIG. 6 is a block diagram illustrating an inside of an RF driver, which is an example of the heat supply driver of FIG. 4A;
FIGS. 7A to 7D are views illustrating cavities in a supercooling chamber according to an embodiment of the present disclosure;
FIG. 8A is a diagram illustrating a graph of temperature change of water when an RF signal is not output;
FIG. 8B is a diagram illustrating a graph of the temperature change of water according to the presence or absence of the RF signal;
FIG. 9 is a flowchart illustrating a method of operating a refrigerator according to an embodiment of present disclosure;
FIG. 10A is a flowchart illustrating a method of operating a refrigerator according to another embodiment of present disclosure;
FIG. 10B is a flowchart illustrating a method of operating a refrigerator according to further another embodiment of present disclosure;
FIG. 11 is a flowchart illustrating a method of operating a refrigerator according to further another embodiment of present disclosure; and
FIGS. 12 to 20 are diagrams referenced for description of the operation method of FIGS. 10A to 11.

### DETAILED DESCRIPTION OF THE PREFERRED EMBODIMENTS

Exemplary embodiments of the present disclosure are described with reference to the accompanying drawings in detail.

The suffixes "module" and "unit" in elements used in description below are given only in consideration of ease in preparation of the specification and do not have specific meanings or functions. Therefore, the suffixes "module" and "unit" may be used interchangeably.

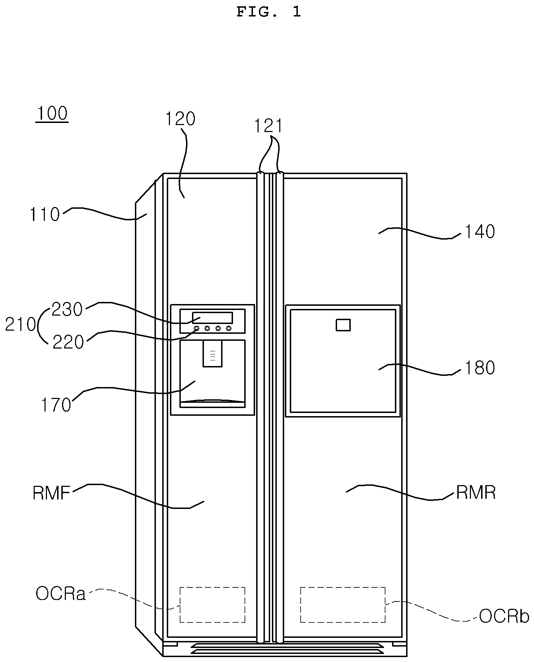

FIG. 1 is a perspective view illustrating a refrigerator according to an embodiment of the present disclosure.

Referring to the drawings, a schematic appearance of a refrigerator 100 according to an embodiment of the present disclosure is formed by a case 110 having an inner space partitioned into a freezer compartment RMF and a refrigerating compartment RMR, a freezer compart door 120 for shielding the freezer compartment RMF, and a refrigerating compartment door 140 for shielding the refrigerating compartment RMR.

In addition, the front surfaces of the freezer compartment door 120 and the refrigerating compartment door 140 are further provided with a door handle 121 protruding forward, so that a user easily grips and rotates the freezer compartment door 120 and the refrigerating compartment door 140.

Meanwhile, the front surface of the refrigerating compartment door 140 may be further provided with a home bar 170 which is a convenient means for allowing a user to take out a storage such as a beverage contained therein without opening the refrigerating compartment door 140.

In addition, the front surface of the freezer compartment door 120 may be provided with a dispenser 160 which is a convenient means for allowing the user to easily take out ice or drinking water without opening the freezer compartment door 120, and a control panel 210 for controlling the driving operation of the refrigerator 100 and displaying the state of the refrigerator 100 being operated on a screen may be further provided in an upper side of the dispenser 160.

Meanwhile, in the drawing, it is illustrated that the dispenser 160 is disposed in the front surface of the freezer compartment door 120, but is not limited thereto, and may be disposed in the front surface of the refrigerating compartment door 140.

Meanwhile, a supercooling chamber OCRa capable of maintaining freshness without freezing goods by using the cold of the freezer compartment may be disposed in the upper or lower portion of the freezer compartment RMF.

Alternatively, it is also possible to place a supercooling chamber OCRb in which goods are not frozen and freshness can be maintained by using the cold of the freezer compartment or the refrigerating compartment at the upper or lower portion of the refrigerating compartment RMR.

The supercooling chamber OCRa or OCRb in present disclosure is used for a supercooling state in which goods are not changed to solid and maintain a liquid state in a state where cold having a temperature at which a phase change from liquid to solid occurs, for example, a temperature equal to or less than 0°C, is supplied.

The control panel 210 may include an input device 220 formed of a plurality of buttons, and a display device 230 for displaying a control screen, an operation state, and the like.

The display device 230 displays information such as a control screen, an operation state, a temperature inside the refrigerator, and the like. For example, the display device 230 may display the set temperature of the freezer compartment and the set temperature of the refrigerating compartment.

The display device 230 may be implemented in various ways, such as a liquid crystal display (LCD), a light emitting diode (LED), an organic light emitting diode (OLED), and the like. In addition, the display device 230 may be implemented as a touch screen capable of serving as the input device 220.

The input device 220 may include a plurality of operation buttons. For example, the input device 220 may include a freezer compartment temperature setting button (not illustrated) for setting the freezer compartment temperature, and a refrigerating compartment temperature setting button (not illustrated) for setting the refrigerating compartment temperature. Meanwhile, the input device 220 may be implemented of a touch screen that can also serve as the display device 230.

Meanwhile, the refrigerator based on the embodiment of the present disclosure is not limited to a double door type illustrated in the drawing, but may be a one door type, a sliding door type, a curtain door type, and the like regardless of its form. Furthermore, as described later, it is sufficient that the RF output device 190a for outputting an RF signal is disposed inside the freezer compartment.

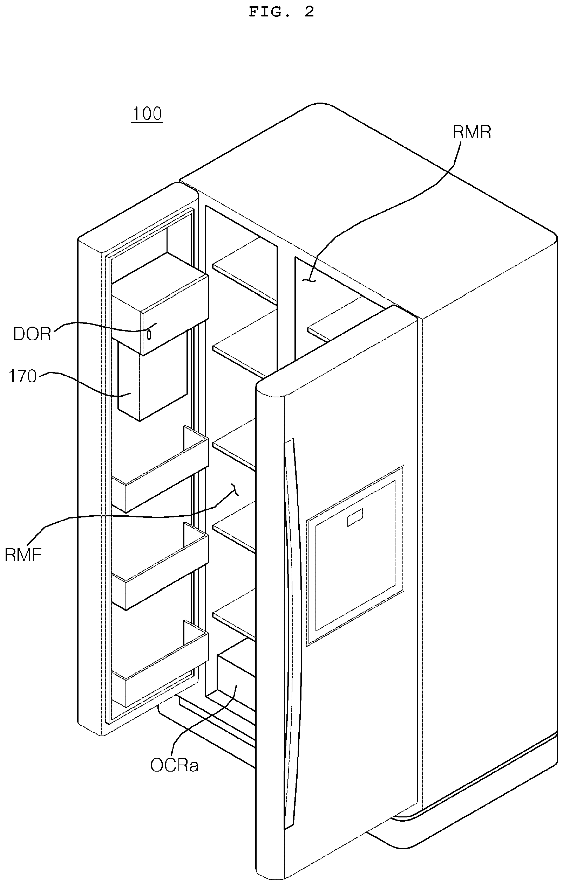

FIG. 2 is a perspective view of the refrigerator of FIG. 1 in which the door is opened.

Referring to the drawing, the freezer compartment RMF is disposed inside the freezer compartment door 120 and the refrigerating compartment RMR is disposed inside the refrigerating compartment door 140.

The supercooling chamber OCRa may be placed at the inner lower portion of the freezer compartment RMF to maintain freshness without freezing goods by using the cold of the freezer compartment.

In the drawing, it is exemplified that the supercooling chamber OCRa is disposed in the inner lower space of the freezer compartment RMF. However, the present disclosure is not limited thereto, and the supercooling chamber can be disposed in various positions.

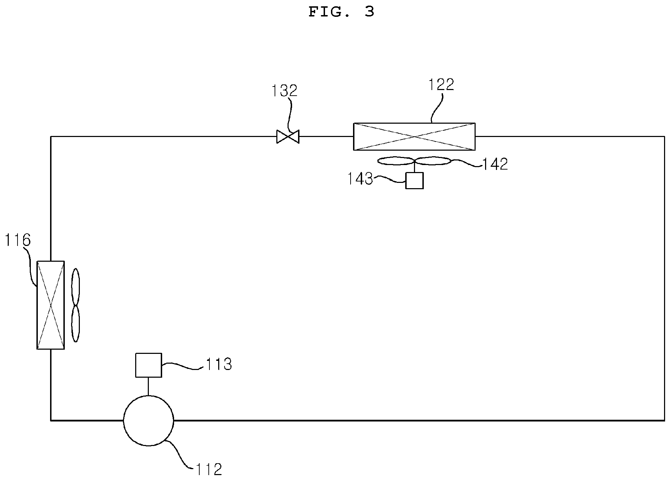

FIG. 3 is a view schematically illustrating a configuration of the refrigerator of FIG. 1.

Referring to the drawings, the refrigerator 100 may include a compressor 112, a condenser 116 for condensing a refrigerant compressed by the compressor 112, a freezer compartment evaporator 122 which is supplied with the refrigerant condensed in the condenser 116 to evaporate, and is disposed in a freezer compartment RMF, and a freezer compartment expansion valve 132 for expanding the refrigerant supplied to the freezer compartment evaporator 122.

Meanwhile, in the drawing, it illustrated that a single evaporator is used, but it is also possible to use respective evaporators may be used in the refrigerating compartment and the freezer compartment.

That is, the refrigerator 100 may further include a refrigerating compartment evaporator (not illustrated) disposed in a refrigerator compartment (not illustrated), a three-way valve (not illustrated) for supplying the refrigerant condensed in the condenser 116 to the refrigerating compartment evaporator (not illustrated) or the freezer compartment evaporator 122, and a refrigerating compartment expansion valve (not illustrated) for expanding the refrigerant supplied to the refrigerating compartment evaporator (not illustrated).

In addition, the refrigerator 100 may further include a gas-liquid separator (not illustrated) which separates the refrigerant passed through the evaporator 122 into a liquid and a gas.

In addition, the refrigerator 100 may further include a refrigerating compartment fan (not illustrated) and a freezer compartment fan 144 that suck cold that has passed through the freezer compartment evaporator 122 and blow the sucked cold into a refrigerating compartment (not illustrated) and a freezer compartment RMF respectively.

In addition, the refrigerator 100 may further include a compressor driver 113 for driving the compressor 112, and a refrigerating compartment fan driver (not illustrated) and a freezer compartment fan driver 145 for driving the refrigerating compartment fan (not illustrated) and the freezer compartment fan 144.

Meanwhile, based on the drawing, since a common evaporator 122 is used for the refrigerating compartment and the freezer compartment, in this case, a damper (not illustrated) may be installed between the refrigerating compartment and the freezer compartment, and a fan (not illustrated) may forcibly blow the cold generated in one evaporator to be supplied to the freezer compartment and the refrigerating compartment.

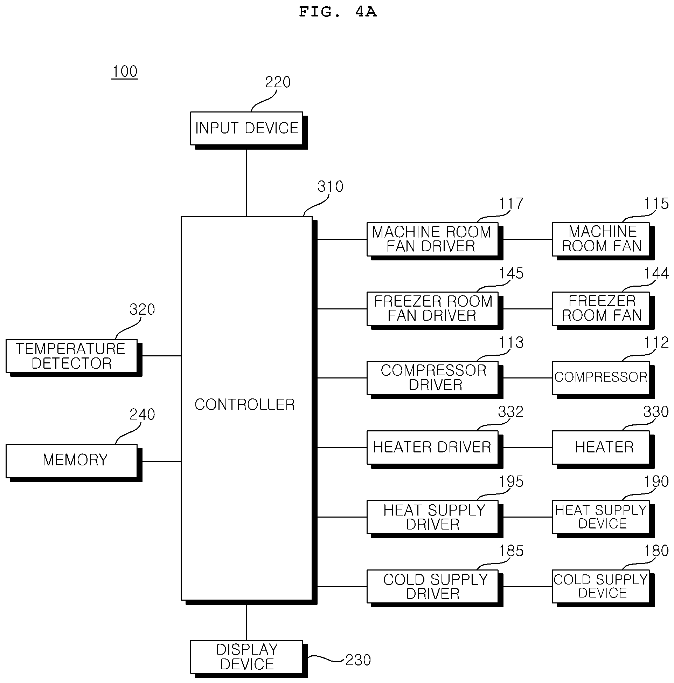

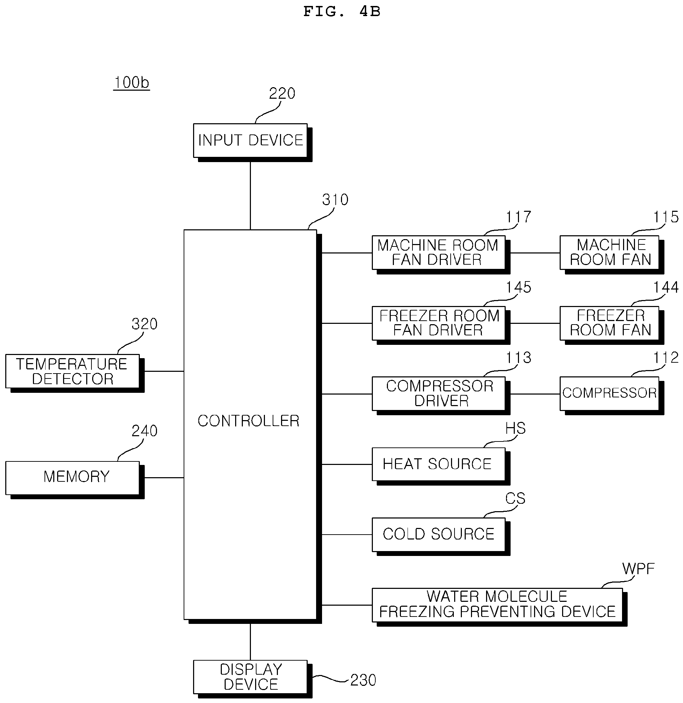

FIG. 4 is an example of a block diagram schematically illustrating the inside of the refrigerator illustrated in FIG. 1.

Referring to the drawing, the refrigerator 100 of FIG. 4A includes the compressor 112, a machine room fan 115, the freezer compartment fan 144, a controller 310, a heater 330, an RF output device 190a, a temperature detector 320, and a memory 240.

In addition, the refrigerator may further include the compressor driver 113, a machine room fan driver 117, the freezer compartment fan driver 145, a heater driver 332, a cold supply driver 185, a cold supply device 189, a heat supply driver 195, a heat supply device 190, the display device 230, and the input device 220.

The compressor 112, the machine room fan 115, and the freezer compartment fan 144 are described with reference to FIG. 2.

The input device 220 includes a plurality of operation buttons, and transmits a signal for an input freezer compartment set temperature or refrigerating compartment set temperature to the controller 310.

The display device 230 may display an operation state of the refrigerator. Meanwhile, the display device 230 is operable under the control of a display controller (not illustrated).

The memory 240 may store data necessary for operating the refrigerator.

For example, the memory 240 may store power consumption information for each of the plurality of power consumption devices. In addition, the memory 240 may output corresponding power consumption information to the controller 310 based on the operation of each power consumption device in the refrigerator.

The temperature detector 320 detects a temperature in the refrigerator and transmits a signal for the detected temperature to the controller 310. Here, the temperature detector 320 detects the refrigerating compartment temperature and the freezer compartment temperature respectively. In addition, the temperature of each chamber in the refrigerating compartment or each chamber in the freezer compartment may be detected.

Meanwhile, the temperature detector 320 may detect the temperature in the supercooling chamber OCR. Specifically, an inlet temperature detector Tsi for detecting the inlet temperature of the cavity CAV in the supercooling chamber OCR and an outlet temperature detector Tso for detecting the outlet temperature of the cavity CAV may be provided.

As illustrated in the drawings, the controller 310 may control the compressor driver 113, the fan driver 117 or 145, the cold supply driver 185, and the heat supply driver 195 to control on/off operations of the compressor 112, the fan 115 or 144, the cold supply device 180, and the heat supply device 190, and may finally control the compressor 112, the fan 115 or 144, the cold supply device 180, and the heat supply device 190. Here, the fan driver may be the machine room fan driver 117 or the freezer compartment fan driver 145.

For example, the controller 310 may output a corresponding speed command value signal to the compressor driver 113 or the fan driver 117 or 145 respectively.

The compressor driver 113 and the freezer compartment fan driver 145 described above are provided with a compressor motor (not illustrated) and a freezer compartment fan motor (not illustrated) respectively, and each motor (not illustrated) may be operated at a target rotational speed under the control of the controller 310.

Meanwhile, the machine room fan driver 117 includes a machine room fan motor (not illustrated), and the machine room fan motor (not illustrated) may be operated at the target rotational speed under the control of the controller 310.

When the motor is a three-phase motor, it may be controlled by a switching operation in an inverter (not illustrated) or may be controlled at a constant speed by using an AC power source intactly. Here, each motor (not illustrated) may be any one of an induction motor, a Blush less DC (BLDC) motor, a synchronous reluctance motor (synRM) motor, and the like.

Meanwhile, as described above, the controller 310 may control the overall operation of the refrigerator 100, in addition to the operation control of the compressor 112 and the fan 115 or 144.

For example, as described above, the controller 310 may control the overall operation of the refrigerant cycle based on the set temperature from the input device 220. For example, the controller 310 may further control a three-way valve (not illustrated), a refrigerating compartment expansion valve (not illustrated), and the freezer compartment expansion valve 132, in addition to the compressor driver 113, the refrigerating compartment fan driver 143, and the freezer compartment fan driver 145. In addition, the operation of the condenser 116 may also be controlled. In addition, the controller 310 may control the operation of the display device 230.

Meanwhile, the heater 330 may be a freezer compartment defrost heater. In order to remove frost attached to the freezer compartment evaporator 122, the freezer compartment defrost heater 330 may operate. To this end, the heater driver 332 may control the operation of the heater 330. Meanwhile, the controller 310 may control the heater driver 332.

Meanwhile, the controller 310 may output respective driving signals to the cold supply driver 185 and the heat supply driver 195 to control the cold supply device 180 and the heat supply device 190.

Accordingly, the cold supply device 180 or the heat supply device 190 operates, and cold or heat may be supplied into the supercooling chamber OCR.

In particular, based on the operation of the cold supply device 180 or the heat supply device 190, it is possible to maintain the supercooling state for freshness of goods in the supercooling chamber OCR.

FIG. 4B is another example of a block diagram schematically illustrating the inside of the refrigerator illustrated in FIG. 1.

Referring to the drawings, similarly to FIG. 4A, the refrigerator 100b of FIG. 4B includes the compressor 112, the machine room fan 115, the freezer compartment fan 144, the controller 310, the temperature detector 320, and the memory 240.

However, unlike FIG. 4A, the refrigerator 100b of FIG. 4B has a difference in that it includes a heat source HS, a cold source CS, and a water molecule freezing preventing device WPF.

The heat source HS may include at least one of a heater (330 in FIG. 4A) or an RF output device (190a in FIG. 4A).

Meanwhile, the heat source HS may include the heat supply device 190 of FIG. 4A.

The cold source CS may include an evaporator 122 that performs heat exchange using the refrigerant compressed in the compressor 112.

Alternatively, the cold source CS may include a fan operated to supply cold generated by heat exchange in the evaporator 122 to the first storage compartment OCR.

Alternatively, the cold source (CS) may include a heat absorption surface of a thermoelectric element.

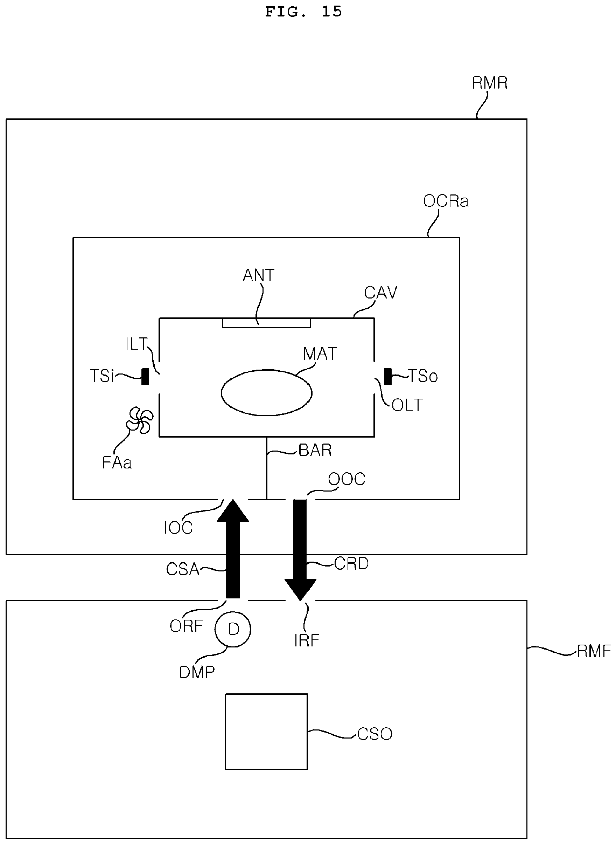

Alternatively, the cold source (CS) may further include a fan (FAa in FIG. 15) that operates to supply cold generated by heat exchange on the heat absorption surface of the thermoelectric element to the cavity CAV.

Alternatively, the cold source (CS) may include the cold supply device 180 of FIG. 4A.

The water molecule freezing preventing device WPF may include at least one of an RF output device (190a in FIG. 4A), an electric field output device, a magnetic field output device, or an ultrasonic output device.

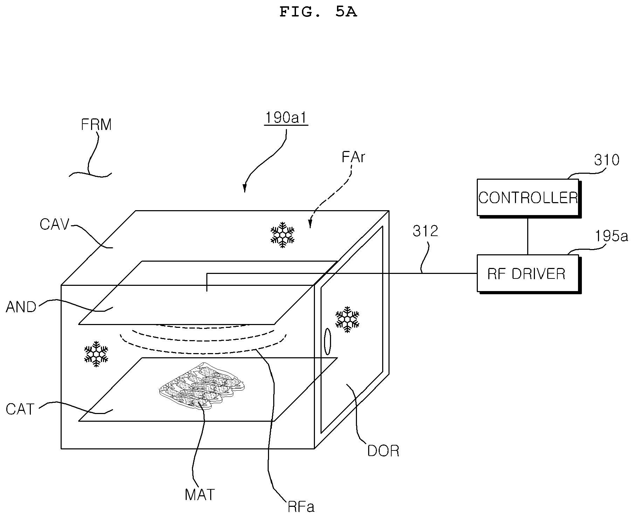

FIG. 5A is a diagram illustrating an example of an RF output device, which is an example of the heat supply device of FIG. 4A.

Referring to the drawing, the RF output device 190a1 may include a first plate AND and a second plate CAT disposed inside or outside the cavity CAV.

The first plate AND and the second plate CAT may be spaced apart from each other, and may be disposed above and below the cavity CAV respectively, and the first plate AND may be electrically connected to an RF signal transmitter 312.

Meanwhile, when an electrical signal is applied to at least one of the first plate AND or the second plate CAT while the goods MAT is positioned in the second plate CAT or in the cavity CAV, the RF signal RFa may be output to the goods MAT inside the cavity CAV.

Meanwhile, unlike the drawing, the first plate AND and the second plate CAT may be disposed to be spaced apart from each other in the side surface of the cavity CAV.

In addition, in the drawing, it is illustrated that the door DOR is disposed in the side surface of the cavity CAV. The door DOR may be opened or closed by rotating or moving in one direction.

Meanwhile, it is preferable that the RF signal output from the RF output device 190a1 is output while the door DOR is closed. To this end, the RF output device 190a1 may further include a door open/close detection sensor that detects whether the door DOR is opened or closed.

Meanwhile, the RF signal transmitter 312 may be connected to an RF driver 195a. The RF driver 195 may be controlled by the controller 310.

For the goods MAT in the cavity CAV, among the first section P1aa in which the temperature of the goods MAT sequentially decreases to a first temperature T1aa which is a supercooling set temperature, a second section P2aaa in which the temperature of the goods MAT increases from the first temperature T1aa to a second temperature T2aa which is a thawing completion temperature, and a third section P3aa in which the temperature of goods MAT increases from the second temperature T2aa to a third temperature T3aa which to be higher than the first temperature T1aa, in the second section P2aaa, the controller may be configured to operate the RF output device 190a1.

The first section P1aa may be referred to as a first supercooling section, the second section P2aaa may be referred to as a thawing section, and the third section P3aa may be referred to as a second supercooling section.

The controller 310 may be configured to operate the RF output device 190a1 in the first section P1aa or the third section P3aa, in addition to the second section P2aaa.

Accordingly, it is possible to maintain the freshness of the goods MAT in the refrigerator 100 using the RF signal. In particular, the movement of water molecules in the goods MAT by the RF signal becomes active, and the freshness can be maintained while preventing the goods MAT from freezing.

Meanwhile, as the power of the RF signal output from the RF output device 190a1 increases, the controller 310 may control to increase the first section P1aa, or to delay the start point of the second section P2aa or increase the second section P2aa. Accordingly, the freshness of the goods MAT in the refrigerator 100 may be maintained by using the RF signal.

Meanwhile, the controller 310 may output an RF signal to the goods MAT in the cavity CAV, and may be configured to further perform a third section P3aa in which the temperature of the goods MAT falls after the second section P2aa. Accordingly, the goods MAT can be frozen while maintaining the freshness of the goods MAT.

Meanwhile, in the operation of the RF output device 190a1, the cold FAr in the cooling chamber FRM may be supplied into the cavity CAV. Accordingly, the supercooling state of the goods MAT may be maintained while maintaining the freshness of the goods MAT in the refrigerator 100 by using the RF signal.

Meanwhile, when the operation of the RF output device 190a1 is turned off, the cold FAr in the cooling chamber FRM is supplied into the cavity CAV, and when the RF output device 190a1 is operated, the cold FAr in the cooling chamber FRM may be supplied into the cavity CAV. Accordingly, it is possible to freeze the goods MAT without supplying the RF signal.

Meanwhile, when the RF output device 190a1 is operated, the power consumption consumed in the compressor 112 may increase than before the RF output device 190a1 is operated. Accordingly, the supercooling state of the goods MAT may be maintained while maintaining the freshness of the goods MAT in the refrigerator 100 by using the RF signal.

Meanwhile, when the RF output device 190a1 is operated, the temperature of the cooling chamber FRM may increase than before the RF output device 190a1 is operated. Accordingly, the supercooling state of the goods MAT may be maintained while maintaining the freshness of the goods MAT in the refrigerator 100 by using the RF signal.

Meanwhile, heat insulating material (CHa, CHb) may be attached to at least a portion of the inner surface or the outer surface of the cavity CAV. Accordingly, the inside of the cavity CAV is insulated from the cooling chamber FRM, so that the freshness of the goods MAT in the refrigerator 100 may be maintained by using the RF signal output into the cavity CAV.

Meanwhile, when the operation signal for the operation of the RF output device 190a1 is input in a state where the goods MAT is positioned in the cavity CAV, the RF output device 190a1 may output the RF signal in the direction of the goods MAT. Accordingly, the freshness of the goods MAT in the refrigerator 100 may be maintained by using the RF signal.

Meanwhile, the controller 310 may control at least one of an output period or an output power of the RF signal to vary, based on the type of the goods MAT or the input signal. Accordingly, the freshness of the goods MAT can be appropriately maintained based on the type of the goods MAT.

Meanwhile, when the goods MAT is positioned in the cavity CAV, the temperature of the goods MAT falls based on the cold FAr supplied into the cooling chamber FRM, and then maintains within a predetermined temperature range based on the RF signal from the RF output device 190a1. Accordingly, the supercooling state of the goods MAT may be maintained while maintaining the freshness of the goods MAT in the refrigerator 100 by using the RF signal.

Meanwhile, it is preferable that the temperature in the second section P2aa is higher than the lowest temperature at the time when the temperature of the goods MAT in the first section P1aa falls. Accordingly, the supercooling state of the goods MAT may be maintained while maintaining the freshness of the goods MAT in the refrigerator 100 by using the RF signal.

Meanwhile, the controller 310 may control the RF signal from the RF output device 190a1 to be output before the time point of lowest temperature in the first section P1aa. Accordingly, the supercooling state of the goods MAT may be maintained while maintaining the freshness of the goods MAT in the refrigerator 100 by using the RF signal.

Meanwhile, after the refrigerator 100 is turned on, the temperature of the cavity CAV may continue to fall until the temperature of the goods MAT maintains within a predetermined temperature range. Accordingly, the supercooling state of the goods MAT may be maintained while maintaining the freshness of the goods MAT in the refrigerator 100 by using the RF signal.

Meanwhile, the falling slope or the lowest temperature at the time when the temperature of goods MAT in the first section P1aa falls may change based on the power of the RF signal from the RF output device 190a1. Accordingly, the supercooling state of the goods MAT may be maintained while maintaining the freshness of the goods MAT in the refrigerator 100 by using the RF signal.

Meanwhile, as the power of the RF signal becomes larger, the magnitude of the MAT temperature fall slope becomes smaller, and the lowest temperature may become larger. Accordingly, the supercooling state of the goods MAT may be maintained while maintaining the freshness of the goods MAT in the refrigerator 100 by using the RF signal.

Meanwhile, the controller 310 may control the RF signal from the RF output device 190a1 to be output, from the time when the temperature of the goods MAT falls. Accordingly, the supercooling state of the goods MAT may be maintained while maintaining the freshness of the goods MAT in the refrigerator 100 by using the RF signal.

Meanwhile, when the maintaining period within a predetermined temperature range of the goods MAT is greater than or equal to an allowable period, the controller 310 turns off the RF output device 190a1, and may control to supply the cold FAr supplied to the cooling chamber FRM in the cavity CAV. Accordingly, the supercooling state of the goods MAT may be maintained while maintaining the freshness of the goods MAT in the refrigerator 100 by using the RF signal.

Meanwhile, the controller 310 is configured to output the RF signal to the cavity CAV when there is an operation input signal for the RF output device 190a1 while the goods MAT is frozen. It is preferable that the power of the RF signal output at the time when freezing the goods MAT is greater than the power of the RF signal output before freezing the MAT. Accordingly, the supercooling state of the goods MAT may be maintained while maintaining the freshness of the goods MAT in the refrigerator 100 by using the RF signal.

Meanwhile, the frequency of the RF signal is preferably between 13.56MHz to 433MHz. Accordingly, the movement of water molecules in the goods MAT by the RF signal becomes active, so that the goods MAT can be frozen while maintaining the freshness of the goods MAT.

Meanwhile, the controller 310 controls the RF signal of a first power to be output during a scan section, determines the type of the goods MAT based on the RF signal reflected during the scan section and, after the end of the scan section, may control the RF signal of the second power set based on the determined type of the goods MAT to be output. Accordingly, the supercooling state of the goods MAT may be maintained while efficiently maintaining the freshness of the goods MAT in the refrigerator 100 by using the RF signal.

Meanwhile, among a cooling section, an idle section, a pre-defrost cooling section, a defrost section, a post-defrost idle section, a post-defrost cooling section, the controller 310 may control the output of the RF signal in the cooling section, the pre-defrost cooling section, or the post-defrost cooling section to be greater than the output in the idle section, the defrost section, or the post-defrost idle section. Accordingly, the supercooling state of the goods MAT may be maintained while maintaining the freshness of the goods MAT in the refrigerator 100 by using the RF signal.

Meanwhile, the controller 310 may control the output of the RF signal to decrease or stop in the defrost section or during a door (DOR) load response operation, and control the output of the RF signal to increase after the defrost section or the end of the load response operation when the door (DOR) is opened. Accordingly, the supercooling state of the goods MAT may be maintained while maintaining the freshness of the goods MAT in the refrigerator 100 by using the RF signal.

Meanwhile, when the defrost section is performed while the RF signal is output, the controller 310 may control the power of the RF signal to decrease, and control the power of the RF signal to increase when the defrost section is released. Accordingly, the supercooling state of the goods MAT may be maintained while maintaining the freshness of the goods MAT in the refrigerator 100 by using the RF signal.

Meanwhile, when the door DOR of the cooling chamber FRM or the cavity CAV is opened, the controller 310 may control to stop the output of the RF signal in operation. Thus, power consumption can be reduced.

Meanwhile, when a temperature of the cooling chamber FRM is equal to or lower than a first temperature, and the temperature in the cavity CAV is equal to or lower than a second temperature higher than first temperature in the state where the cooling chamber FRM or the door DOR of the cavity CAV is closed, the controller 310 may control to output the RF signal. Accordingly, the supercooling state of the goods MAT may be maintained while maintaining the freshness of the goods MAT in the refrigerator 100 by using the RF signal.

Meanwhile, the controller 310 determines the state of the goods MAT in the cavity CAV while the RF signal is output, and may change the power of the RF signal, continuously output the RF signal, or stop the RF signal based on the state of the goods MAT. Accordingly, the supercooling state of the goods MAT may be maintained while maintaining the freshness of the goods MAT in the refrigerator 100 by using the RF signal.

Meanwhile, the controller 310 may control to stop the output of the RF signal, when the temperature of the cooling chamber FRM is greater than the first temperature or when the temperature in the cavity CAV is greater than the second temperature. Accordingly, the supercooling state of the goods MAT may be maintained while maintaining the freshness of the goods MAT in the refrigerator 100 by using the RF signal.

Meanwhile, the RF output device 1901a includes the first plate AND and the second plate CAT, and the RF output device 190a1 may further include at least one of a signal detector ED for detecting the RF signal reflected from the goods MAT in the cavity CAV, a temperature detector TD for detecting the temperature in the cavity CAV, or a camera CAM for photographing the goods MAT in the cavity CAV. Accordingly, through a feedback of the RF signal output, the supercooling state of the goods MAT may be maintained while efficiently maintaining the freshness of the goods MAT in the refrigerator 100.

Meanwhile, the RF output device 190a1 of FIG. 5A may be disposed in the cooling chamber FRM, may be disposed inside or outside the cavity CAV, and may output the RF signal into the cavity CAV.

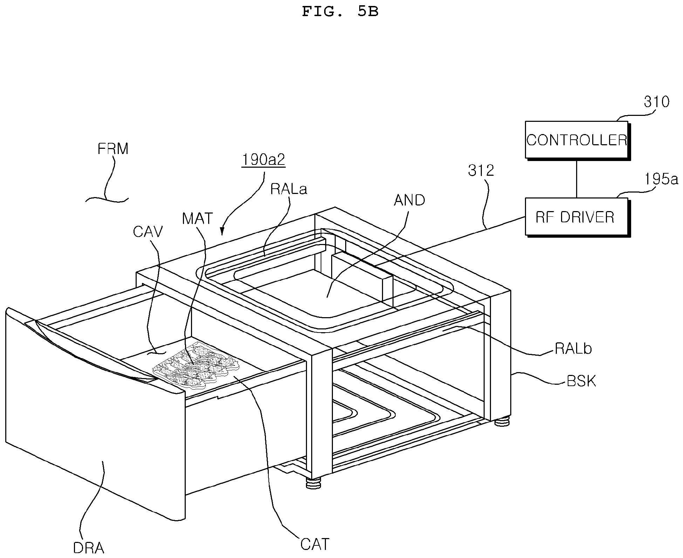

FIG. 5B is a diagram illustrating another embodiment of the RF output device which is an example of the heat supply device of FIG. 4A.

Referring to the drawing, the RF output device 190a2 according to another embodiment of the present disclosure may include the cavity CAV disposed in the cooling chamber FRM.

The RF output device 190a2 according to another embodiment of the present disclosure is similar to the RF output device 190a of FIG. 5A, but there is a difference in that the cavity CAV is formed of a drawer DRA and a basket BSK.

A rail member (RALa, RAlb) for coupling with the drawer DRA is disposed in the basket BSK, and the drawer DRA may be moved back and forth by the coupling of the rail member (RALa, RAlb). Accordingly, the door DOR as illustrated in FIG. 5A is omitted.

Meanwhile, the RF output device 190a2 may include the first plate AND and the second plate CAT are disposed inside the cavity CAV or are disposed in the cavity CAV disposed outside.

In particular, in the drawing, it is illustrated that the first plate AND is disposed in the basket BSK, and the second plate CAT is disposed below the drawer DRA.

Meanwhile, the goods MAT is disposed below the drawer DRA or on the second plate CAT.

Meanwhile, the first plate AND may be electrically connected to the RF signal transmitter 312.

Meanwhile, in a state where the goods MAT is positioned on the second plate CAT or in the cavity CAV, when an electrical signal is applied to at least one of the first plate AND or the second plate CAT, the RF signal RFa may be output to the goods MAT inside the cavity CAV.

Meanwhile, it is preferable that the RF signal output from the RF output device 190a2 is output in a state the drawer DRA is coupled to the basket BSK and is closed. To this end, the RF output device 190a2 may further include a drawer DRA coupling detection sensor for detecting whether the drawer DRA is coupled.

Meanwhile, the RF signal transmitter 312 may be connected to the RF driver 195a, and the RF driver 195a may be controlled by the controller 310.

Meanwhile, the RF output device 190a2 of FIG. 5B may be disposed in the cooling chamber FRM, may be disposed inside or outside the cavity CAV, and may output an RF signal into the cavity CAV.

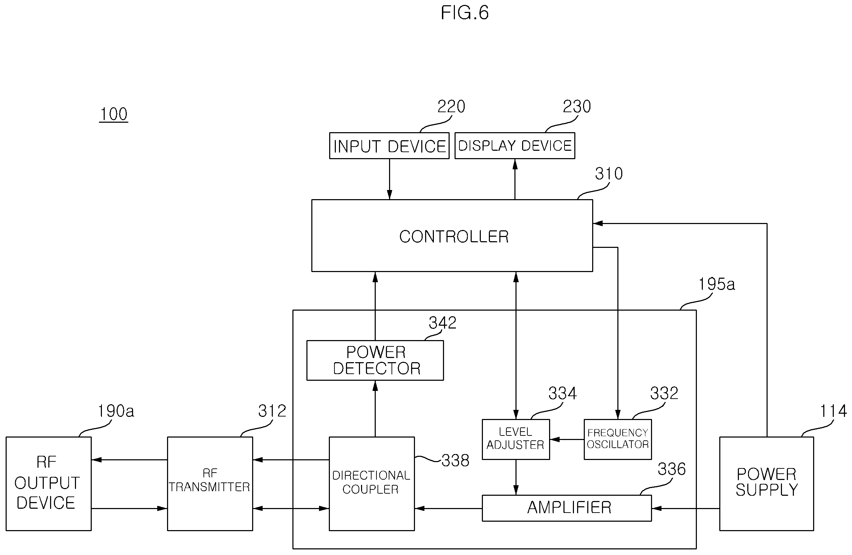

FIG. 6 is a block diagram illustrating the inside of the RF driver which is an example of the heat supply driver of FIG. 4A.

Referring to the drawing, the RF output device 190a may be connected to the RF signal transmitter 312, and the RF signal transmitter 312 may be connected to the RF driver 195a.

The input device 220 may include a separate button for operating on or off the RF output device 190a.

The display device 230 may display information related to the operating on or off of the RF output device 190a.

The controller 310 may control the RF output device 190a by using the RF driver 195a.

The RF driver 195a may include a frequency oscillator 332, a level adjuster 334, an amplifier 336, a directional coupler 338, and a power detector 342.

The frequency oscillator 332 oscillates to output an RF signal of a corresponding frequency, by a frequency control signal from the controller 310.

The frequency oscillator 322 may include a voltage controlled oscillator VCO. Based on the voltage level of the frequency control signal, the voltage controlled oscillator VCO oscillates a corresponding frequency. For example, as the voltage level of the frequency control signal becomes higher, the frequency oscillated and generated by the voltage controlled oscillator VCO becomes higher.

The level adjuster 334 may oscillate the frequency signal oscillated by the frequency oscillator 332 to output an RF signal with a corresponding power based on the power control signal. The level adjuster 334 may include a voltage controlled attenuator VCA.

Based on the voltage level of the power control signal, the voltage controlled attenuator VCA performs a correction operation so that an RF signal is output with a corresponding power. For example, as the voltage level of the power control signal becomes higher, the power level of the signal output from the voltage controlled attenuator VCA becomes higher.

The amplifier 336 may output an RF signal by amplifying the oscillated frequency signal, based on the frequency signal oscillated by the frequency oscillator 332 and the power control signal by the level adjuster 334.

As described above, the amplifier 336 may include a solid state power amplifier SSPA using a semiconductor device, and in particular, may include a Monolithic Microwave Integrated Circuits MMIC using a single substrate. Thus, the size thereof is reduced, and the integration of device can be achieved.

Meanwhile, the frequency oscillator 332, the level adjuster 334, and the amplifier 336, described above, may be implemented as a single device, which may be referred to as a solid state power oscillator SSPO.

The directional coupler DC 338 transmits the RF signal amplified and output by the amplifier 336 to the RF signal transmitter 312. The RF signal output from the RF signal transmitter 312 is output to the goods in the RF output device 190a.

Meanwhile, the RF signal that is not absorbed and reflected by the goods in the RF output device 190a may be input to the directional coupler 338 through the RF signal transmitter 312. The directional coupler 338 transfers the reflected RF signal to the controller 310.

Meanwhile, the power detector 342 is disposed between the directional coupler 338 and the controller 310, and detects the output power of the RF signal which is amplified and output by the amplifier 336 and transferred to the RF signal transmitter 312 via the directional coupler 338. The detected power signal is input to the controller 310, and is used for a signal output efficiency calculation. Meanwhile, the power detector 342 may be implemented of a diode device, or the like to detect a power.

Meanwhile, the power detector 342 is disposed between the directional coupler 338 and the controller 310, and detects the power of the reflected RF signal reflected by the RF output device 190a and received by the directional coupler 338. The detected power signal is input to the controller 310, and is used for signal output efficiency calculation. Meanwhile, the power detector 342 may be implemented of a diode device, or the like to detect a power.

Meanwhile, the RF driver 195a is disposed between the amplifier 336 and the directional coupler 338, and may further include an isolation device (not illustrated) for passing through the RF signal in the case of transferring the RF signal amplified by the amplifier 336 to the RF output device 190a, and blocking the RF signal reflected from the RF output device 190a. Here, the isolation device (not illustrated) may be implemented of an isolator.

The controller 310 may calculate signal output efficiency, based on the RF signal which is not absorbed and reflected by the goods among the RF signals emitted into the RF output device 190a.

Meanwhile, when the plurality of RF signals are sequentially emitted into the RF output device 190a, the controller 310 calculates signal output efficiency for each frequency of the plurality of RF signals.

Meanwhile, the controller 310 may control an RF signal output section to be divided into a scan section and a main operation section so as to output signal efficiently.

The controller 310 may sequentially output a plurality of RF signals into the RF output device 190a during the scan section, and calculate signal output efficiency based on the reflected RF signal.

In addition, the controller 310 may output RF signals having different output periods respectively or output only the RF signal having a certain frequency, in the main operation section, based on the signal output efficiency calculated in the scan section. Meanwhile, it is preferable that the power of the RF signal in the main operation section is significantly higher than the power of the RF signal in the scan section. Thus, power consumption can be reduced.

The controller 310 may generate and output a frequency control signal to vary the output period of the RF signal based on the calculated signal output efficiency.

Meanwhile, the controller 310 may control to output the RF signal of corresponding frequency, only when the signal output efficiency calculated for each frequency is equal to or greater than a set value.

The power supply 114 may boost the power input to the refrigerator 100 to a high voltage and output to the RF driver 195a. The power supply 114 may be implemented of a high voltage transformer or an inverter.

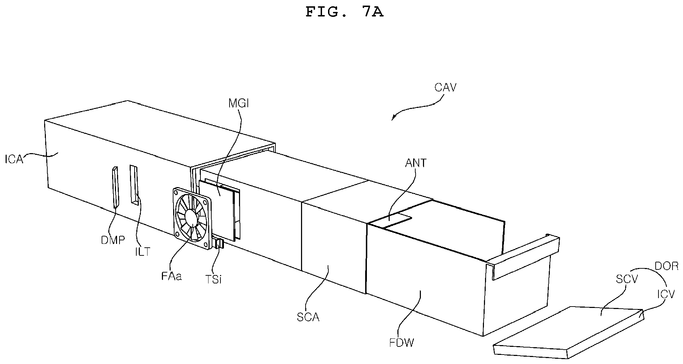

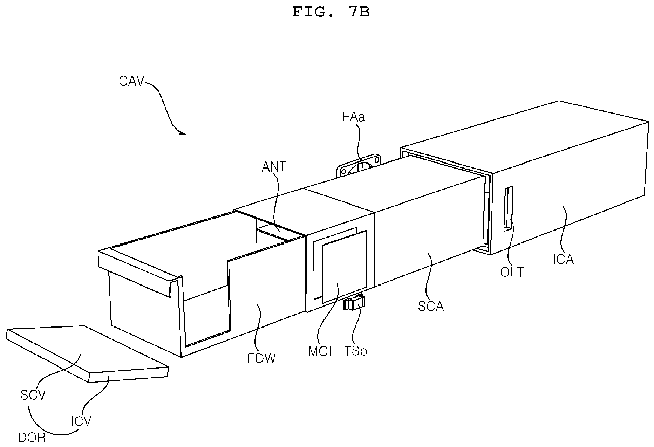

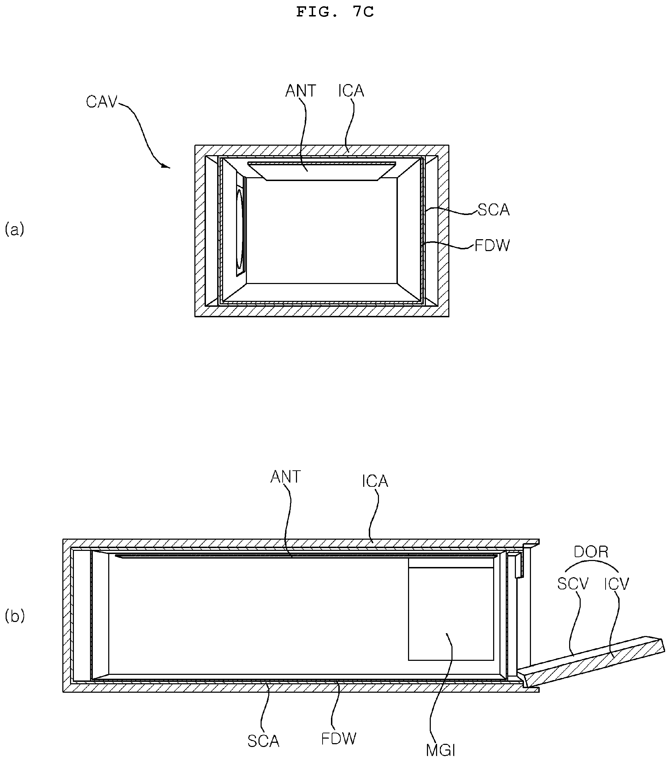

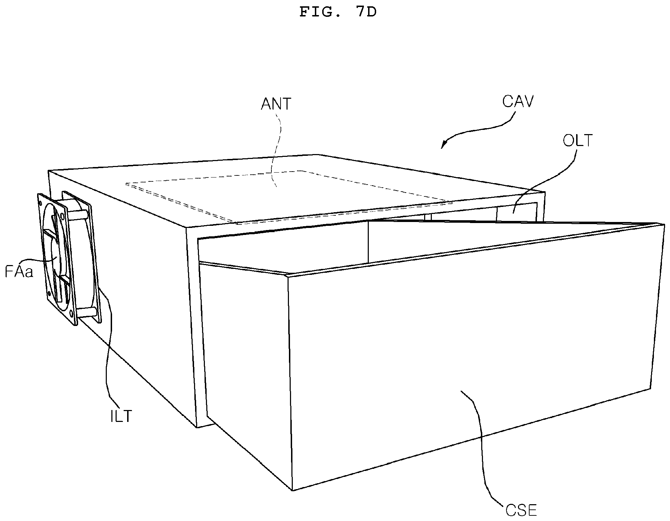

FIGS. 7A to 7D are views illustrating cavities in a supercooling chamber according to an embodiment of the present disclosure.

Referring to the drawings, the cavity CAV in the supercooling chamber according to the embodiment of the present disclosure may include an outermost insulating case ICA, a damper DMP which is formed on one side surface of the insulating case ICA and disposed near the inlet ILT, a shield case SCA which is accommodated inside the insulation case ICA, a first mesh grid MGI which is disposed on one side surface of the shield case SCA, a fan FAa which is disposed on the mesh grid MGI, an inlet temperature detector Tsi which is disposed near the fan FAa, a second mesh grid MGI which is disposed on the other side surface of the shield case SCA, an outlet temperature detector Tso which is disposed near the second mesh grid MGI, a drawer FDW which raises the goods and can be withdrawn forward, and a door DOR which is attached to the front of the drawer FDW and rotatable.

An inlet may be formed on one side surface of the insulating case ICA, an outlet may be formed on the other side surface thereof, the inlet temperature detector Tsi may be disposed in a corresponding area near the inlet ILT of the insulating case ICA, and the outlet temperature detector Tso may be disposed in a corresponding region near the outlet OLT of the insulating case ICA.

Meanwhile, the door DOR may include an inner surface shield cover SCV and an outer surface insulation cover SCV to block heat.

Meanwhile, in order to output the RF signal into the drawer FDW, an antenna ABT may be disposed in an upper portion of an inner surface of the shield case SCA.

By the operation of the fan FAa, cold flows in through the inlet ILT formed on one side surface of the insulating case ICA and passes through the goods inside the drawer FDW, and a portion of heat-exchanged cold flows out through the outlet OLT formed on the other side surface of the insulating case ICA.

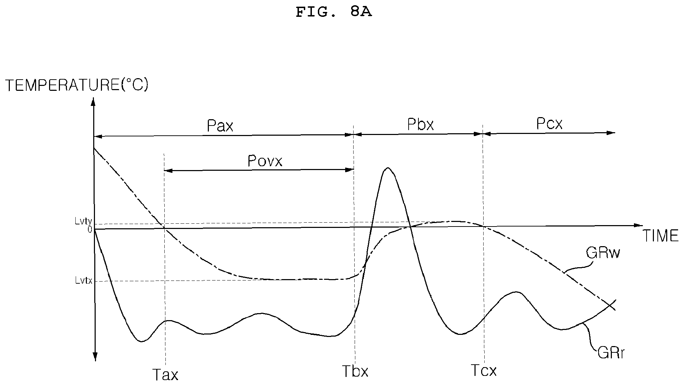

FIG. 8A is a diagram illustrating a graph of temperature change of water when the RF signal is not output.

Referring to the drawing, GRw according to cold supply represents a graph of temperature change of water, and GRr represents a graph of ambient temperature change.

In a Pax section, the temperature of the water gradually decreases, and then a Lvtx temperature can be maintained below a freezing temperature.

The Pax section may correspond to a liquid section in which a phase change from liquid to solid does not occur even though the temperature of water is below the freezing temperature.

In particular, a section Povx below 0°C in the Pax sections may be referred to as a supercooling section.

In the Pax section, the temperature around the water is kept lower than the water temperature.

Next, a Pbx section after the Pax section is a section in which the phase changes from liquid to solid due to release of the supercooling, and may be a mixture section of liquid and solid.

In the Pbx section, the water temperature sequentially increases, resulting in a section where the ambient temperature increases more than the water temperature due to the phase change from liquid to solid.

In a Pcx section after the Pbx section, water changes to a solid, and thus, the Pcx section may correspond to a solid section.

Accordingly, in the Pbx section, the water temperature sequentially decreases, and the ambient temperature remains lower than the water temperature.

In order to maintain the freshness of the goods in the refrigerator 100, it is better not to cause supercooling release. Therefore, it is important for the supercooling section to prevent condensation from occurring during the Pax section through the internal motion of water molecules.

To this end, in the present disclosure, an RF signal may be output into a cavity CAV inside the supercooling chamber by using the RF output device 190a.

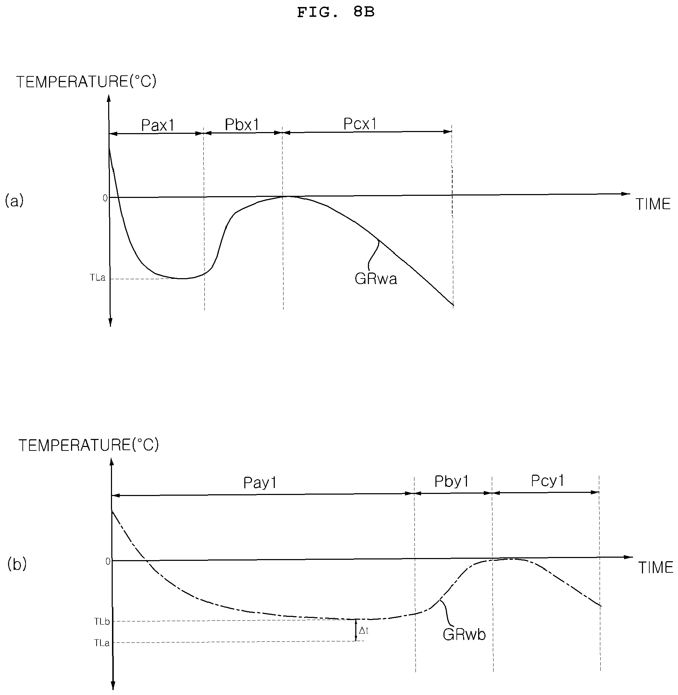

FIG. 8B is a diagram illustrating a graph of temperature change of water according to the presence or absence of the RF signal.

Referring to the drawing, (a) of FIG. 8B illustrates a water temperature change graph GRWa when an RF signal is not output.

In the water temperature change graph GRWa, a Pax1 section may be the supercooling section and a section in which water is in a liquid state, a Pbx1 section may be a section in which the phase changes from liquid to solid due to release of the supercooling and a mixed section of liquid and solid, and a Pcx1 section may correspond to a solid section in which water is changed into solid.

(b) of FIG. 8B illustrates a water temperature change graph GRWb when an RF signal is not output.

In the water temperature change graph GRWb, a Pay1 section may be a supercooling section and a section in which water is in a liquid state, a Pby1 section is a section in which the phase changes from liquid to solid due to the release of the supercooling and a mixed section of liquid and solid, and a Pcy1 section may correspond to a solid section where water is changed into solid.

According to (b) of FIG. 8B, since the RF signal is output, according to the movement of water molecules, the supercooling state is maintained for a considerably longer time than in (a) of FIG. 8A.

In particular, although the release of the supercooling easily occurs due to external impact such as opening and closing of a door, according to (b) of FIG. 8B, the release of the supercooling does not occur due to the output of the RF signal, and the supercooling state can be maintained for a considerably long period of time.

As a result, when the RF signal is output to goods in a liquid state, the freshness of cold can be maintained for a considerably long time according to the movement of water molecules.

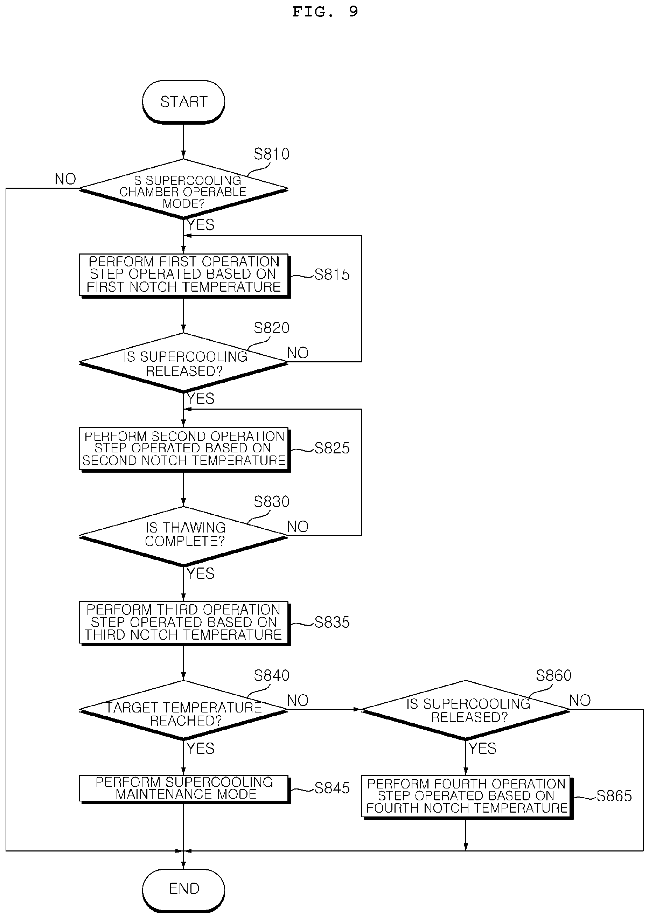

Meanwhile, in the present disclosure, regardless of the output of the RF signal, in a situation after the supercooling is released and the freezing of goods starts by the mixed section of liquid and solid, a method of entering a re-supercooling state is proposed to maintain the freshness of the goods. Particularly, a method that can efficiently uses the power consumption of the refrigerator 100 by efficiently supplying cold and heat during the re-supercooling is proposed. Particularly, a method that can efficiently supply cold or heat until reaching the supercooling maintaining section is proposed. This will be described with reference to FIG. 9 below.

FIG. 9 is a flowchart illustrating a method of operating a refrigerator according to an embodiment of present disclosure.

Referring to the drawing, the controller 310 determines whether the supercooling chamber OCR is in an operable mode (S810) .

For example, when an operation button outside the supercooling chamber OCR is turned on, the controller 310 may be configured to operate the supercooling chamber OCR.

As another example, when the operation button outside the supercooling chamber OCR is turned off, the controller 310 may be configured to not operate the supercooling chamber OCR.

Meanwhile, before Step 810 (S810), the operation mode of the first storage compartment OCR may be varied. The operation mode may include at least one of a refrigerating operation mode, a supercooling operation mode, or a thawing mode.

For example, before Step 810 (S810), the first storage compartment OCR may operate in the refrigerating operation mode, and after Step 810 (S810), the first storage compartment OCR may operate in the supercooling operation mode.

Meanwhile, a notch temperature of the first storage compartment OCR in the refrigerating operation mode may be higher than a notch temperature of the first storage compartment OCR in the supercooling operation mode. Accordingly, the temperature of the first storage compartment OCR may decrease more in the supercooling operation mode than in the refrigerating operation mode.

Meanwhile, the notch temperature may mean a set temperature.

For example, a notch temperature of the refrigerating compartment may be 3°C, and a notch temperature of the freezer compartment may be -18°C. Meanwhile, a notch temperature of the first storage compartment OCR or the supercooling chamber may be between 0°C and -10°C.

Meanwhile, the notch temperature of the first storage compartment OCR in the refrigerating operation mode may be lower than the notch temperature of the first storage compartment OCR in the heating operation mode. Accordingly, the temperature of the first storage compartment OCR may increase more in the heating operation mode than in the refrigerating operation mode.

Meanwhile, the refrigerator 100 may further include a second storage compartment RMR disposed outside the first storage compartment OCR. The second storage compartment RMR may correspond to the refrigerating compartment RMR of FIG. 1.

Accordingly, the controller 310 may be configured to control the notch temperature of the second storage compartment RMR to be than the notch temperature for the cooling operation of the first storage compartment OCR. Accordingly, the temperature of the second storage compartment RMR is higher than that of the first storage compartment OCR.

Meanwhile, the refrigerator 100 may further include a third storage compartment RMF. The third storage compartment RMF may correspond to the freezer compartment RMF of FIG. 1.

Accordingly, the controller 310 may be configured to control the notch temperature for the third storage compartment RMF to be lower than the notch temperature for the cooling operation of the first storage compartment OCR. Accordingly, the temperature of the third storage compartment RMF is lower than that of the first storage compartment OCR.

Next, when the supercooling chamber OCR is in an operable mode, the controller 310 may be configured to perform a first operation step operated based on the first notch temperature for the cooling operation of the first storage compartment OCR (S815).

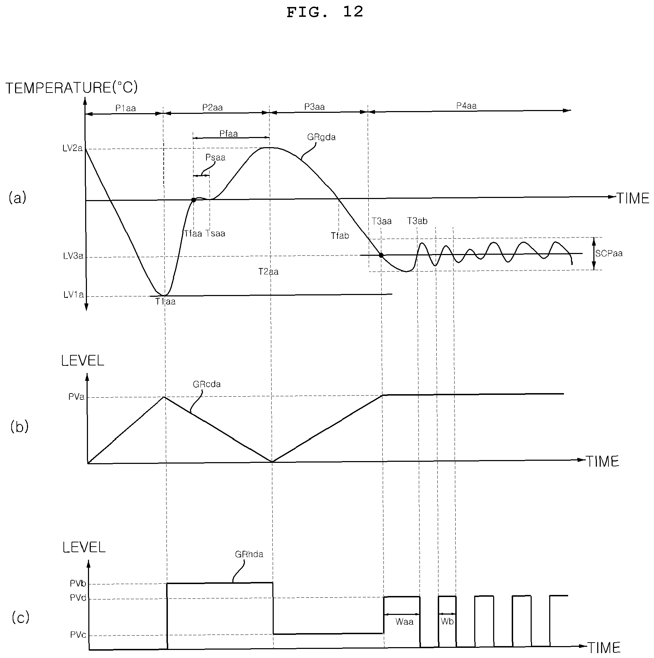

The first operation step may correspond to a first supercooling mode or a first supercooling section (P1aa in FIG. 12).

For example, the controller 310 may be configured to operate a fan to supply cold in the evaporator 122 performing heat exchange using the refrigerant compressed in the compressor 112 to the first storage compartment OCR during the first operation step.

For example, the controller 310 may be configured to operate the heat absorption surface of the thermoelectric element during the first operation step to supply cold generated on the heat absorption surface to the first storage compartment OCR.

Specifically, during the first operation step, the controller 310 may be configured to operate the fan (FAa in FIG. 15) to supply cold generated by heat exchange on the heat absorption surface of the thermoelectric element to the cavity CAV.

Meanwhile, the controller 310 may be configured to supply cold to the cavity CAV inside the supercooling chamber OCR during the first operation step and sequentially decrease the temperature of the goods MAT.

In this case, the controller 310 may be configured to control the output of the water molecule freezing preventing device WPF to be zero when the first operation step (P1aa in FIG. 12) is performed during the first operation step. Accordingly, power consumption by the water molecule freezing preventing device WPF can be reduced.

As another example, the controller 310 may be configured to operate the water molecule freezing preventing device WPF while supplying cold into the cavity CAV inside the supercooling chamber OCR during the first operation step so that the temperature of the goods MAT sequentially decreases.

Next, the controller 310 determines whether the supercooling is released (S820), and when the supercooling is released, the controller 310 may be configured to perform a second operation step operated based on the second notch temperature for the heating operation of the first storage compartment OCR (S825).

The second operation step may correspond to the thawing mode or the thawing section (P2aa in FIG. 12). Accordingly, after Step 825 (S825), the first storage compartment OCR may operate in the thawing mode.

For example, the controller 310 may determine that the supercooling is released when the temperature of the goods MAT decreases to a first target temperature.

As another example, the controller 310 may determine that the supercooling is released when the temperature of the goods MAT increases after decreasing.

As another example, the controller 310 may determine that the supercooling is released when the difference between the temperature at the outlet and the temperature at the inlet of the cavity CAV increases and then decreases.

As another example, the controller 310 may determine that the supercooling is released when the temperature of the outlet of the cavity CAV decreases and then increases.

As another example, the controller 310 may determine that the supercooling is released when a change rate of the difference between the temperature at the outlet and the temperature at the inlet of the cavity CAV is equal to or more than a predetermined value.

As another example, the controller 310 determines that the supercooling state of the goods MAT is released when a first change rate, which is the difference between the outlet temperature and the inlet temperature of the cavity CAV during the operation of the fan FAa for supplying cold, is equal to or more than a first reference value, and a second change rate, which is the difference between the outlet temperature and the inlet temperature of the cavity CAV when the fan FAa is turned off, is equal to or more than a second reference value.

Meanwhile, when the supercooling is released, the goods MAT are in a liquid state according to the supercooling mode, and then rapidly undergo a phase change to change to a solid state.

The controller 310 preferably performs a release mode so as not to freeze in order to maintain the freshness of the goods MAT.

Meanwhile, the controller 310 may be configured to operate the heat source HS during the second operation step.

For example, the controller 310 may be configured to operate at least one of a heater or an RF output device 180 during the second operation step. Accordingly, the temperature increases during the second operation step.

Meanwhile, the controller 310 may be configured to operate the water molecule freezing preventing device WPF during the second operation step.

For example, the controller 310 may be configured to operate at least one of the RF output device, the electric field output device, the magnetic field output device, or the ultrasonic output device.

The controller 310 may be configured to control the output of the water molecule freezing preventing device WPF during the execution of the second operation step (P2aa in FIG. 12) to be greater than the output thereof during the execution of the first operation step (P1aa in FIG. 12).

Meanwhile, during the second operation step, the controller 310 may be configured to stop the supply of the cold into the cavity CAV inside the supercooling chamber OCR, supply heat, and sequentially increase the temperature of the goods MAT.

Alternatively, during the second operation step, the controller 310 may be configured to decrease the supply of the cold into the cavity CAV inside the supercooling chamber OCR, supply heat, and sequentially increase the temperature of the goods MAT.

Next, the controller 310 determines whether the thawing is complete (S830), and when the thawing is complete, may be configured to perform a third operation step operated based on the third notch temperature for the cooling operation of the first storage compartment OCR (S835).

The third operation step may correspond to the second supercooling mode or the second supercooling section (P3aa in FIG. 12).

For example, the controller 310 may determine that thawing is complete when the temperature of the goods MAT increases to a set thawing completion temperature. The set thawing completion temperature at this time is preferably greater than 0°C.

As another example, the controller 310 may determine that the thawing is complete when the temperature of the goods MAT increase and then decreases.

As another example, the controller 310 may determine that the thawing is complete when the difference between the temperature at the outlet and the temperature at the inlet of the cavity CAV is greater than zero.

As another example, the controller 310 may determine that the thawing of the goods MAT ends when the difference between the outlet temperature and inlet temperature of the cavity CAV when the fan FAa is off is greater than zero, and the second change rate which is the difference between the outlet temperature and the inlet temperature of the cavity CAV when the fan FAa is off is equal to or more than the second reference value.

The controller 310 may be configured to operate the heat source HS during the third operation step.

In this case, it is preferable that the second notch temperature is higher than 0°C, and the third notch temperature and the first notch temperature are lower than the second notch temperature.

Moreover, the cold in the first storage chamber in the first operation step and the third operation step increases and the cold in the second operation step decreases. Accordingly, it is possible to efficiently supply cold or heat until reaching the supercooling maintaining section.

Meanwhile, the controller 310 may be configured to control the output of the water molecule freezing preventing device WPF to be zero during the third operation step.

Meanwhile, the controller 310 may be configured to control the output of the water molecule freezing preventing device WPF during the execution of the third operation step (P3aa in FIG. 12) to be greater than or equal to the output of the water molecule freezing preventing device WPF during the execution of the first operation step (P1aa in FIG. 12).

For example, the controller 310 may be configured to supply cold to the cavity CAV inside the supercooling chamber OCR during the third operation step and sequentially decrease the temperature of the goods MAT.

As another example, the controller 310 may be configured to output the RF signal while cold is supplied into the cavity CAV inside the supercooling chamber OCR during the third operation step and sequentially decrease the temperature of the goods MAT.

It is preferable that the magnitude or intensity of the RF signal when the second supercooling mode is performed is greater than the magnitude or intensity of the RF signal when the first supercooling mode is performed.

Meanwhile, it is preferable that the magnitude of the temperature change rate when the second supercooling mode is performed is less than the magnitude of the temperature change rate when the first supercooling mode is performed.

That is, it is preferable that a temperature drop during the execution of the second supercooling mode is more slowly than a temperature drop during the execution of the first supercooling mode.

Next, the controller 310 may determine that whether the second target temperature is reached during the execution of the second supercooling mode (S840), and when it is determined that the second target temperature is reached, the controller 310 may be configured to perform the supercooling maintenance mode (S845).

The second target temperature at this time is a temperature higher than the supercooling release temperature, and is preferably higher than the above-described first target temperature.

When the second target temperature is reached, the controller 310 may be configured to control the supply of the heat to be turned on or off repeatedly while cold is supplied into the cavity CAV inside the supercooling chamber OCR.

Meanwhile, the controller 310 may be configured to control a heat supply period Waa to be greater than a remaining heat supply period Wb during the execution of the supercooling maintenance mode. Accordingly, it is possible to efficiently maintain the supercooling.

Meanwhile, the controller 310 may be configured to perform Step S860 when the second target temperature is not reached during the second supercooling mode.

The controller 310 may determine whether the supercooling is released in a state where the second target temperature is not reached during the execution of the second supercooling mode (S860), and when it is determined that the supercooling is released, the controller 310 may be configured to perform a fourth operation step operated based on a fourth notch temperature for the heating operation of the first storage compartment OCR (S865).

In this case, the fourth notch temperature may be higher than 0°C.

The fourth operation step may correspond to the thawing mode or the thawing section. Accordingly, after Step 865 (S865), the first storage compartment OCR may operate in the thawing mode.

Meanwhile, the controller 310 may be configured to operate the heat source HS during the fourth operation step.

For example, the controller 310 may be configured to operate at least one of a heater or an RF output device 180 during the fourth operation step. Accordingly, the temperature increases during the fourth operation step.

Meanwhile, the controller 310 may be configured to control the fourth notch temperature to be higher than the second notch temperature when a time elapsed from a time when an operation start condition of the second operation step (P2aa in FIG. 12) is satisfied to a time when an operation end condition of the second operation step (P2aa in FIG. 12) is satisfied exceeds a predetermined range. Accordingly, it is possible to efficiently supply the cold or heat until reaching the supercooling maintaining section.

Meanwhile, the controller 310 may be configured to control the fourth notch temperature to be equal to the second notch temperature when the time elapsed from the time when the operation start condition of the second operation step (P2aa in FIG. 12) is satisfied to the time when the operation end condition of the second operation step (P2aa in FIG. 12) is satisfied is within the predetermined range. Accordingly, it is possible to efficiently supply the cold or heat until reaching the supercooling maintaining section.

Meanwhile, the controller 310 may be configured to control the fourth notch temperature to be lower than the second notch temperature when the time elapsed from the time when the operation start condition of the second operation step (P2aa in FIG. 12) is satisfied to the time when the operation end condition of the second operation step (P2aa in FIG. 12) is satisfied is less than the predetermined range. Accordingly, it is possible to efficiently supply the cold or heat until reaching the supercooling maintaining section.

Meanwhile, the controller 310 may be configured to control the fourth notch temperature to be higher than the second notch temperature when the temperature of the first storage compartment OCR exceeds a predetermined temperature from the time when the operation start condition of the second operation step (P2aa in FIG. 12) is satisfied to the time when the operation end condition of the second operation step (P2aa in FIG. 12) is satisfied. Accordingly, it is possible to efficiently supply the cold or heat until reaching the supercooling maintaining section.

The controller 310 may be configured to control the fourth notch temperature to be equal to the second notch temperature when the temperature of the first storage compartment OCR is within the predetermined temperature from the time when the operation start condition of the second operation step (P2aa in FIG. 12) is satisfied to the time when the operation end condition of the second operation step (P2aa in FIG. 12) is satisfied. Accordingly, it is possible to efficiently supply the cold or heat until reaching the supercooling maintaining section.

The controller 310 may be configured to control the fourth notch temperature to be lower than the second notch temperature when the temperature of the first storage compartment OCR is less than the predetermined temperature from the time when the operation start condition of the second operation step (P2aa in FIG. 12) is satisfied to the time when the operation end condition of the second operation step (P2aa in FIG. 12) is satisfied. Accordingly, it is possible to efficiently supply the cold or heat until reaching the supercooling maintaining section.

Meanwhile, the controller 310 of the refrigerator 100 according to another embodiment of the present disclosure may be configured to operate the first operation step (P1aa in FIG. 12) based on the first notch temperature for the cooling operation of the first storage compartment OCR, operate the second operation step (P2aa in FIG. 12) based on the second notch temperature for the heating operation of the first storage compartment OCR, and operate the third operation step (P3aa in FIG. 12) based on the third notch temperature for the cooling operation of the first storage compartment OCR are performed. Accordingly, it is possible to efficiently supply the cold or heat until reaching the supercooling maintaining section.

The controller 310 of the refrigerator 100 may be configured to control the output of the water molecule freezing preventing device WPF in the third operation step (P3aa in FIG. 12) to be greater than or equal to the output of the water molecule freezing preventing device WPF in the first operation step (P1aa in FIG. 12). Accordingly, it is possible to efficiently supply the cold or heat until reaching the supercooling maintaining section.

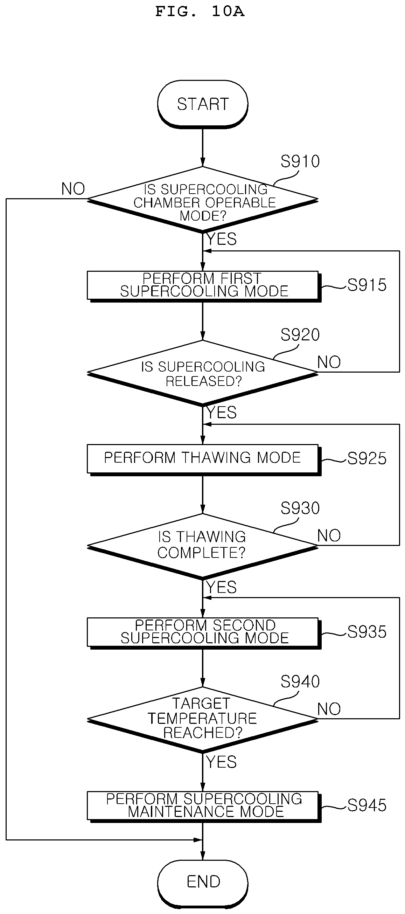

FIG. 10A is a flowchart illustrating a method of operating a refrigerator according to another embodiment of present disclosure.

Referring to the drawing, the controller 310 determines whether the supercooling chamber OCR is in an operable mode (S910).

For example, when an operation button outside the supercooling chamber OCR is turned on, the controller 310 may be configured to operate the supercooling chamber OCR.

As another example, when the operation button outside the supercooling chamber OCR is turned off, the controller 310 may be configured to not operate the supercooling chamber OCR.

Next, when the supercooling chamber OCR is in an operable mode, the controller 310 may be configured to perform the first supercooling mode (S915).

For example, the controller 310 may be configured to supply cold into the cavity CAV inside the supercooling chamber OCR and sequentially decrease the temperature of the goods MAT.

As another example, the controller 310 may be configured to output the RF signal while cold is supplied into the cavity CAV inside the supercooling chamber OCR and sequentially decrease the temperature of the goods MAT.

Next, the controller 310 may determine whether supercooling is released (S920), and when it is determined that the supercooling is released, the controller 310 may be configured to end the first supercooling mode and perform the thawing mode (S925).

For example, the controller 310 may determine that the supercooling is released when the temperature of the goods MAT decreases to a first target temperature.

As another example, the controller 310 may determine that the supercooling is released when the temperature of the goods MAT increases after decreasing.

As another example, the controller 310 may determine that the supercooling is released when the difference between the temperature at the outlet and the temperature at the inlet of the cavity CAV increases and then decreases.

As another example, the controller 310 may determine that the supercooling is released when the temperature of the outlet of the cavity CAV decreases and then increases.

As another example, the controller 310 may determine that the supercooling is released when a change rate of the difference between the temperature at the outlet and the temperature at the inlet of the cavity CAV is equal to or more than a predetermined value.

As another example, the controller 310 may determine that the supercooling state of the goods MAT is released when the first change rate, which is the difference between the outlet temperature and the inlet temperature of the cavity CAV during the operation of the fan FAa for supplying cold, is equal to or more than the first reference value, and the second change rate, which is the difference between the outlet temperature and the inlet temperature of the cavity CAV when the fan FAa is turned off, is equal to or more than the second reference value.

Meanwhile, when the supercooling is released, the goods MAT are in a liquid state according to the supercooling mode, and then rapidly undergo a phase change to change to a solid state.

The controller 310 preferably performs the release mode so as not to freeze in order to maintain the freshness of the goods MAT.

Meanwhile, the controller 310 may be configured to stop the supply of the cold into the cavity CAV inside the supercooling chamber OCR, supply heat, and sequentially increase the temperature of the goods MAT.

Alternatively, the controller 310 may be configured to decrease the supply of the cold into the cavity CAV inside the supercooling chamber OCR, supply heat, and sequentially increase the temperature of the goods MAT.

Next, the controller 310 determines whether the thawing is complete (S930), and when it is determined that the thawing is complete, the controller 310 may be configured to perform the second cooling mode (S935).

For example, the controller 310 may determine that the thawing is complete when the temperature of the goods MAT increases to a set thawing completion temperature. The set thawing completion temperature at this time is preferably greater than 0°C.

As another example, the controller 310 may determine that the thawing is complete when the temperature of the goods MAT increases and then deceases.

As another example, the controller 310 may determine that the thawing is complete when the difference between the temperature at the outlet and the temperature at the inlet of the cavity CAV is greater than zero.

As another example, the controller 310 may determine that the thawing of the goods MAT ends when the difference between the outlet temperature and inlet temperature of the cavity CAV when the fan FAa is off is greater than zero, and the second change rate which is the difference between the outlet temperature and the inlet temperature of the cavity CAV when the fan FAa is off is equal to or more than the second reference value.

For example, the controller 310 may be configured to supply cold to the cavity CAV inside the supercooling chamber OCR during the third operation step and sequentially decrease the temperature of the goods MAT.

As another example, the controller 310 may be configured to output the RF signal while cold is supplied to the cavity CAV inside the supercooling chamber OCR and sequentially decrease the temperature of the goods MAT.

It is preferable that the magnitude or intensity of the RF signal when the second supercooling mode is performed is greater than the magnitude or intensity of the RF signal when the first supercooling mode is performed.

Meanwhile, it is preferable that the magnitude of the temperature change rate when the second supercooling mode is performed is less than the magnitude of the temperature change rate when the first supercooling mode is performed.

That is, it is preferable that a temperature drop during the execution of the second supercooling mode is more slowly than a temperature drop during the execution of the first supercooling mode.

Next, the controller 310 may determine that whether the second target temperature is reached during the execution of the second supercooling mode (S940), and when it is determined that the second target temperature is reached, the controller 310 may be configured to perform the supercooling maintenance mode (S945).

The second target temperature at this time is a temperature higher than the supercooling release temperature, and is preferably higher than the above-described first target temperature.

When the second target temperature is reached, the controller 310 may be configured to control the supply of the heat to be turned on or off repeatedly while cold is supplied into the cavity CAV inside the supercooling chamber OCR.

Meanwhile, the controller 310 may be configured to control the heat supply period Waa to be greater than the remaining heat supply period Wb during the execution of the supercooling maintenance mode. Accordingly, it is possible to efficiently maintain the supercooling.

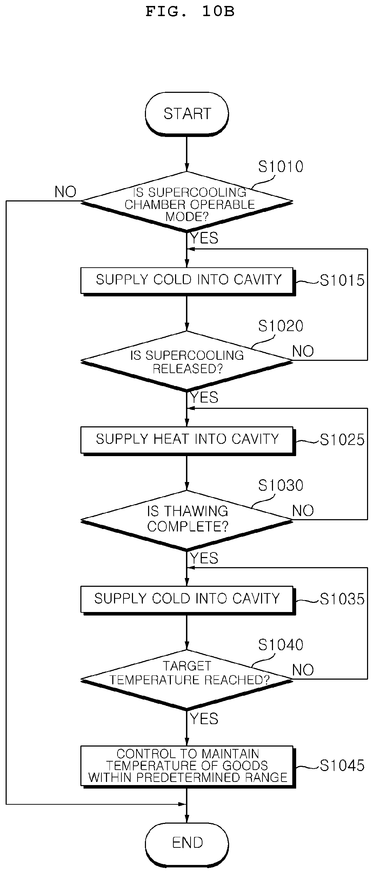

FIG. 10B is a flowchart illustrating a method of operating a refrigerator according to another embodiment of present disclosure.

Referring to the drawing, the controller 310 determines whether the supercooling chamber OCR is in an operable mode (S1010).

For example, when the operation button outside the supercooling chamber OCR is turned on, the controller 310 may be configured to operate the supercooling chamber OCR.

Next, when the supercooling chamber OCR is in the operable mode, the controller 310 may be configured to supply cold to the cavity CAV and sequentially decrease the temperature of the goods MAT (S1015).

Meanwhile, the controller 310 may be configured to output the RF signal while cold is supplied into the cavity CAV inside the supercooling chamber OCR and sequentially decrease the temperature of the goods MAT.

Next, the controller 310 may determine whether the supercooling is released (S1020), and when it is determined that the supercooling is released, the controller 310 may be configured to supply the heat to the cavity CAV and sequentially increase the temperature of the goods MAT (S1025).

For example, the controller 310 may determine that the supercooling is released when the temperature of the goods MAT decreases to the first target temperature.

As another example, the controller 310 may determine that the supercooling is released when the temperature of the goods MAT increases after decreasing.

As another example, the controller 310 may determine that the supercooling is released when the difference between the temperature at the outlet and the temperature at the inlet of the cavity CAV increases and then decreases.

As another example, the controller 310 may determine that the supercooling state of the goods MAT is released when the first change rate, which is the difference between the outlet temperature and the inlet temperature of the cavity CAV during the operation of the fan FAa for supplying cold, is equal to or more than the first reference value, and the second change rate, which is the difference between the outlet temperature and the inlet temperature of the cavity CAV when the fan FAa is turned off, is equal to or more than the second reference value.

Meanwhile, when the supercooling is released, the goods MAT are in a liquid state according to the supercooling mode, and then rapidly undergo a phase change to change to a solid state.

The controller 310 preferably performs the release mode so as not to freeze in order to maintain the freshness of the goods MAT.

In a case where the supercooling is released, the controller 310 may be configured to stop the supply of cold, supply heat in the cavity CAV, and sequentially increase the temperature of the goods MAT. According to the stop of the supply of the cold, it is possible to efficiently manage refrigerator power consumption.

Meanwhile, the controller 310 may be configured to decrease the supply of the cold into the cavity CAV inside the supercooling chamber OCR, supply heat, and sequentially increase the temperature of the goods MAT.

Next, the controller 310 determines whether the thawing is complete (S1030), and when it is determined that the thawing is complete, the controller 310 may be configured to supply cold into the cavity CAV inside the supercooling chamber OCR and sequentially decrease the temperature of the goods MAT (S1035).

For example, the controller 310 may determine that the thawing is complete when the temperature of the goods MAT increases to a set thawing completion temperature. The set thawing completion temperature at this time is preferably greater than 0°C.

As another example, the controller 310 may determine that thawing is complete when the temperature of the goods MAT increases and then decreases.

As another example, the controller 310 may determine that the thawing of the goods MAT ends when the difference between the outlet temperature and inlet temperature of the cavity CAV when the fan FAa is off is greater than zero, and the second change rate which is the difference between the outlet temperature and the inlet temperature of the cavity CAV when the fan FAa is off is equal to or more than the second reference value.

When the thawing is complete, the controller 310 may be configured to output the RF signal while the cold is supplied to the cavity CAV inside the supercooling chamber OCR and sequentially decrease the temperature of the goods MAT.

Meanwhile, it is preferable that the magnitude of the temperature change rate when the second supercooling mode is performed is less than the magnitude of the temperature change rate when the first supercooling mode is performed.

That is, it is preferable that the temperature drop during the execution of the second supercooling mode is more slowly than the temperature drop during the execution of the first supercooling mode.

Next, the controller 310 may determine whether the second target temperature is reached during the execution of the second supercooling mode (S1040), and when it is determined that the second target temperature is reached, the controller 310 may be configured to maintain within a predetermined range SCPaa based on the second target temperature (S1045).

The second target temperature at this time is a temperature higher than the supercooling release temperature, and is preferably higher than the above-described first target temperature.

When the second target temperature is reached, the controller 310 may be configured to control the supply of the heat to be turned on or off repeatedly while cold is supplied into the cavity CAV inside the supercooling chamber OCR.

Accordingly, the temperature of the goods MAT can be maintained within a predetermined range SCPaa based on the second target temperature.

Meanwhile, the controller 310 may be configured to control the heat supply period Waa to be greater than the remaining heat supply period Wb during the execution of the supercooling maintenance mode. Accordingly, it is possible to efficiently maintain the supercooling.

The controller 310 may be configured to control the heat supply period Waa to be greater than the remaining heat supply period Wb during the execution of the supercooling maintenance mode. Accordingly, it is possible to efficiently maintain the supercooling.

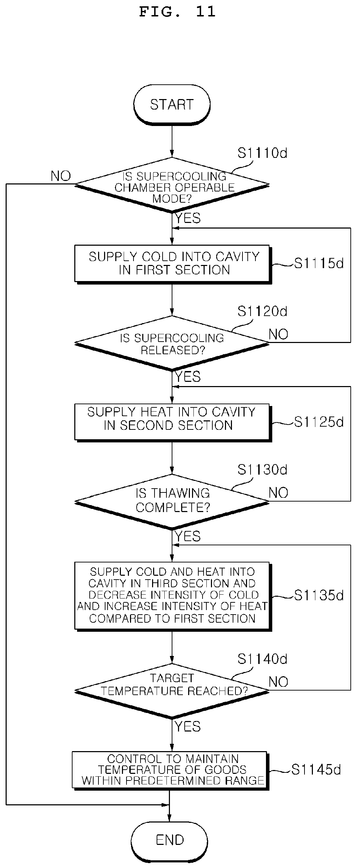

FIG. 11 is a flowchart illustrating a method of operating a refrigerator according to further another embodiment of present disclosure.

Referring to the drawing, the controller 310 determines whether the supercooling chamber OCR is in the operable mode (S1110d).

For example, when the operation button outside the supercooling chamber OCR is turned on, the controller 310 may be configured to operate the supercooling chamber OCR.

Next, when the supercooling chamber OCR is in the operable mode, the controller 310 may be configured to supply cold into the cavity CAV in the first section P1aa and sequentially decrease the temperature of the goods MAT (S1115d) .

In this case, the controller 310 may be configured to control the intensity of the cold supplied into the cavity CAV sequentially increases in the first section P1aa. Accordingly, it is possible to smoothly perform the supercooling.

Meanwhile, the controller 310 may be configured to output the RF signal while the cold is supplied into the cavity CAV inside the supercooling chamber OCR and sequentially decrease the temperature of the goods MAT.

Next, the controller 310 determines whether supercooling is released (S1120d), and when it is determined that the supercooling is released, the controller 310 may be configured to supply heat to the cavity CAV in the second section P2aa after the first section P1aa and sequentially increase the temperature of the goods MAT (S1125d).

For example, the controller 310 may determine that the supercooling is released when the temperature of the goods MAT decreases to the first target temperature. In this case, the first target temperature may correspond to the supercooling release temperature.

As another example, the controller 310 may determine that the supercooling is released when the temperature of the goods MAT increases after decreasing.

As another example, the controller 310 may determine that the supercooling is released when the difference between the temperature at the outlet and the temperature at the inlet of the cavity CAV increases and then decreases.

As another example, the controller 310 may determine that the supercooling state of the goods MAT is released when the first change rate, which is the difference between the outlet temperature and the inlet temperature of the cavity CAV during the operation of the fan FAa for supplying cold, is equal to or more than the first reference value, and the second change rate, which is the difference between the outlet temperature and the inlet temperature of the cavity CAV when the fan FAa is turned off, is equal to or more than the second reference value.

Meanwhile, when supercooling is released, the goods MAT are in a liquid state according to the supercooling mode, and then gradually undergo a phase change to change to a solid state.

The controller 310 preferably performs the release mode so as not to freeze in order to maintain the freshness of the goods MAT.

In the case where the supercooling is released, the controller 310 may be configured to supply the heat into the cavity CAV in the second section P2aa after the first section P1aa and sequentially increase the temperature of goods MAT. According to the stop of the supply of the cold, it is possible to efficiently manage refrigerator power consumption.

Meanwhile, as an example of heat, heat by a heater (not illustrated) and the RF signal by the RF output device 190a may be exemplified, and hereinafter, the output of the RF signal will be mainly described.

Meanwhile, the controller 310 may be configured to sequentially decrease the supply of the cold into the cavity CAV inside the supercooling chamber OCR, supply heat, and sequentially increase the temperature of the goods MAT.

Next, the controller 310 determines whether the thawing is complete (S1130d), and when it is determined that the thawing is complete, in the third section P3aa after the second section P2aa, the controller 310 may be configured to supply cold into the cavity CAV inside the supercooling chamber OCR, the intensity of the cold increase, and increase the intensity of the heat compared to in the first section (S1135d).

For example, the controller 310 may determine that the thawing is complete when the temperature of the goods MAT increases to the set thawing completion temperature. The set thawing completion temperature at this time is preferably greater than 0°C.

As another example, the controller 310 may determine that the thawing is complete when the temperature of the goods MAT increases and then decreases.

As another example, the controller 310 may determine that the thawing of the goods MAT ends when the difference between the outlet temperature and inlet temperature of the cavity CAV when the fan FAa is off is greater than zero, and the second change rate which is the difference between the outlet temperature and the inlet temperature of the cavity CAV when the fan FAa is off is equal to or more than the second reference value.

When the thawing is complete, the controller 310 may be configured to output the heat while the cold is supplied to the cavity CAV inside the supercooling chamber OCR and sequentially decrease the temperature of the goods MAT.

In this case, the controller may be configured to sequentially increase the intensity PVa of the cold in the third section P3aa. Accordingly, it is possible to efficiently maintain the supercooling without arranging a temperature detector in the cavity CAV. In particular, it is possible to efficiently supply the cold in the third section P3aa, which is the supercooling section.

Meanwhile, it is preferable that the magnitude of the temperature change rate when the second supercooling mode is performed is less than the magnitude of the temperature change rate when the first supercooling mode is performed.

That is, it is preferable that the temperature drop during the execution of the second supercooling mode is performed more gradually than the temperature drop during the execution of the first supercooling mode.

Next, the controller 310 may determine whether the second target temperature is reached during the execution of the second supercooling mode (S1140d), and when it is determined that the second target temperature is reached, the controller 310 may be configured to maintain within a predetermined range SCPaa based on the second target temperature (S1145d).

The second target temperature at this time is a temperature higher than the supercooling release temperature, and is preferably higher than the above-described first target temperature.

When the second target temperature is reached, the controller 310 may be configured to control the supply of the heat to be turned on or off repeatedly while cold is supplied into the cavity CAV inside the supercooling chamber OCR.

Accordingly, the temperature of the goods MAT can be maintained within the predetermined range SCPaa based on the second target temperature. Accordingly, it is possible to efficiently maintain the supercooling while maintaining the freshness of the goods.

Meanwhile, the controller 310 may be configured to control the heat supply period Waa to be greater than the remaining heat supply period Wb during the execution of the supercooling maintenance mode. Accordingly, it is possible to efficiently maintain the supercooling.

FIG. 12 illustrates an example of a temperature graph GRgda of the goods, a cold graph GRcda corresponding to the temperature of the goods, and a heat graph GRhda.

Referring to the drawing, as illustrated in (a) of FIG. 12, the temperature of the goods MAT may sequentially decrease in the first section P1aa, the temperature of the goods MAT may sequentially increase in the second section P2aa, the temperature of the goods MAT may decrease sequentially in the third section P3aa, and the temperature of the goods MAT may be maintained within a predetermined range SCPaa based on the third temperature T3aa in a fourth section P4aa.

The controller 310 may be configured to sequentially decrease the temperature of the goods MAT to the first temperature T1aa, which is the supercooling set temperature or the first target temperature, in the first section P1aa according to the first supercooling mode.

To this end, the controller 310 may be configured to supply cold into the cavity CAV in the first section P1aa, as illustrated in (b) of FIG. 12.

In particular, the controller 310 may control the cold supply device 180 to supply cold which sequentially increases to the intensity of PVa in the first section P1aa. Accordingly, the temperature of the goods MAT sequentially decreases to the first temperature T1aa.

Meanwhile, the controller 310 may be configured to not supply heat into the cavity CAV as illustrated in (c) of FIG. 12 in the first section P1aa which is the first supercooling mode.

Meanwhile, the controller 310 may determine that the supercooling is released when the temperature of the goods MAT decreases and then increases, and be configured to perform the thawing mode.

Accordingly, the controller 310 may be configured to sequentially decrease the cold supplied into the cavity CAV in the second section P2aa, as illustrated in (b) of FIG. 12.

Moreover, the controller 310 may be configured to supply heat having the intensity of PVb in the second section P2aa, as illustrated in (c) of FIG. 12. Accordingly, the temperature of the goods MAT sequentially increases to the second temperature T2aa.

For example, the controller 310 may be configured to supply the heat into the cavity CAV using the RF signal output by operating the RF output device 190a.

In particular, in the Pfaa section of the second section P2aa, the thawing may be performed, and in the Psaa section, a portion of the goods MAT may be in a slush state.

Meanwhile, when the temperature of the goods MAT increases and then decreases, the controller 310 may determine that the thawing is complete, and be configured to perform the second supercooling mode.

Next, the controller 310 may be configured to sequentially decrease the temperature of the goods MAT to the third temperature T3aa, which is the second target temperature, in the third section P3aa according to the second supercooling mode.

The third temperature T3aa may be a temperature higher than the first temperature T1aa and may correspond to a supercooling maintenance temperature rather than a supercooling release temperature.

To this end, the controller 310 may be configured to supply the cold which sequentially increases to the intensity of PVa of the first section P1aa in the third section P3aa, as illustrated in (b) of FIG. 12. Accordingly, the temperature of the goods MAT sequentially decreases to the first temperature T1aa. Accordingly, it is possible to effectively supply the cold in the third sections P3aa which is the supercooling section.

Meanwhile, the controller 310 may be configured to supply heat having the intensity of PVc in the third section P3aa, as illustrated in (c) of FIG. 12.

In particular, the controller 310 may be configured to control the intensity of the heat supplied in the third section P3aa to be greater than the intensity of the heat supplied in the first section P1aa.

The controller 310 may be configured to control the magnitude of the temperature change rate Slb of the goods MAT in the third section P3aa to be less than the magnitude of the temperature change rate Sla of the goods MAT in the first section P1aa.

Accordingly, the temperature of the goods MAT decreases gradually in the third section P3aa which is the second supercooling mode compared to in the first section P1aa which is the first supercooling mode.

Meanwhile, the controller 310 may be configured to control the intensity PVc of the heat in the third section P3aa to be less than the intensity PVb of the heat in the second section P2aa.

The controller 310 may be configured to maintain the temperature of the goods MAT within the predetermined range SCPaa based on the third temperature T3aa in the fourth section P4aa after the third section P3aa. Accordingly, it is possible to efficiently maintain the supercooling.

Meanwhile, the fourth section P4aa may be referred to as a supercooling maintaining section.

To this end, the controller 310 may be configured to supply cold having the intensity of PVa equal to PVa of the first section P1aa, as illustrated in (b) of FIG. 12, in the fourth section P4aa.

Meanwhile, during the fourth section P4aa, the controller 310 may be configured to supply the heat into the cavity CAV and control the supply of the heat to be turned on or off repeatedly, as illustrated in (c) of FIG. 12. Accordingly, it is possible to efficiently maintain the supercooling.

Meanwhile, the controller 310 may be configured to control the first heat supply period Waa of the fourth section P4aa to be greater than the remaining heat supply periods Wb. Accordingly, it is possible to efficiently maintain the supercooling.

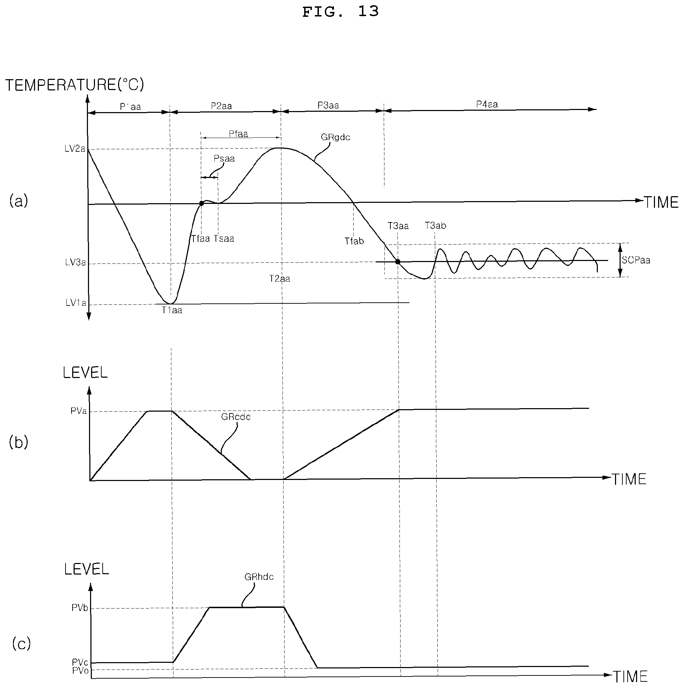

FIG. 13 illustrates another example of a temperature graph GRgdb of the goods, a cold graph GRcdb corresponding to the temperature of the goods, and a heat graph GRhdb.

Referring to the drawing, as illustrated in (a) of FIG. 13 the temperature of the goods MAT may sequentially decrease in the first section P1aa, the temperature of the goods MAT may sequentially increase in the second section P2aa, the temperature of the goods MAT may decrease sequentially in the third section P3aa, and the temperature of the goods MAT may be maintained within the predetermined range SCPaa based on the third temperature T3aa in the fourth section P4aa.

The controller 310 may be configured to sequentially decrease the temperature of the goods MAT to the first temperature T1aa, which is the supercooling set temperature or the first target temperature, in the first section P1aa according to the first supercooling mode.

To this end, the controller 310 may be configured to control the cold supply device 180 in the first section P1aa, and supply the cold which sequentially increases to the intensity of PVa in the first section P1aa and maintains the intensity of PVa, as illustrated in (b) of FIG. 13. Accordingly, the temperature of the goods MAT sequentially decreases to the first temperature T1aa.

Meanwhile, the controller 310 may be configured to supply heat having the intensity of PVo less than PVc and PVb into the cavity CAV as illustrated in (c) of FIG. 13 in the first section P1aa which is the first supercooling mode.

That is, the controller 310 may be configured to supply the heat having the intensity less than the intensity PVb of the heat in the second section P2aa to the cavity CAV in the first section P1aa. Accordingly, it is possible to stably maintain the supercooling in the first section P1aa.

Meanwhile, the controller 310 may determine that the supercooling is released when the temperature of the goods MAT decreases and then increases, and be configured to perform the thawing mode.

Accordingly, the controller 310 may be configured to sequentially decrease the cold supplied into the cavity CAV in the second section P2aa, as illustrated in (b) of FIG. 13.

Moreover, the controller 310 may be configured to supply heat having the intensity of PVb in the second section P2aa, as illustrated in (c) of FIG. 13. Accordingly, the temperature of the goods MAT sequentially increases to the second temperature T2aa.

For example, the controller 310 may be configured to supply the heat into the cavity CAV using the RF signal output by operating the RF output device 190a.

Meanwhile, when the temperature of the goods MAT increases and then decreases, the controller 310 may determine that the thawing is complete, and be configured to perform the second supercooling mode.

Next, the controller 310 may be configured to sequentially decrease the temperature of the goods MAT to the third temperature T3aa, which is the second target temperature, in the third section P3aa according to the second supercooling mode.

The third temperature T3aa may be a temperature higher than the first temperature T1aa and may correspond to the supercooling maintenance temperature rather than the supercooling release temperature.

To this end, the controller 310 may be configured to supply cold which sequentially increases to the intensity of PVa in the third section P3aa, as illustrated in (b) of FIG. 13. Accordingly, the temperature of the goods MAT sequentially decreases to the first temperature T1aa. Accordingly, it is possible to effectively supply the cold in the third sections P3aa which is the supercooling section.

Meanwhile, the controller 310 may be configured to supply heat having the intensity of PVc in the third section P3aa, as illustrated in (c) of FIG. 13.

The controller 310 may be configured to maintain the temperature of the goods MAT within the predetermined range SCPaa based on the third temperature T3aa in the fourth section P4aa after the third section P3aa. Accordingly, it is possible to efficiently maintain the supercooling.

To this end, the controller 310 may be configured to supply cold having the intensity of PVa equal to PVa of the first section P1aa, as illustrated in (b) of FIG. 13, in the fourth section P4aa.

Meanwhile, during the fourth section P4aa, the controller 310 may be configured to supply the heat into the cavity CAV and control the supply of the heat to be turned on or off repeatedly, as illustrated in (c) of FIG. 13. Accordingly, it is possible to efficiently maintain the supercooling.

Meanwhile, the controller 310 may be configured to control the first heat supply period Waa of the fourth section P4aa to be greater than the remaining heat supply periods Wb. Accordingly, it is possible to efficiently maintain the supercooling.

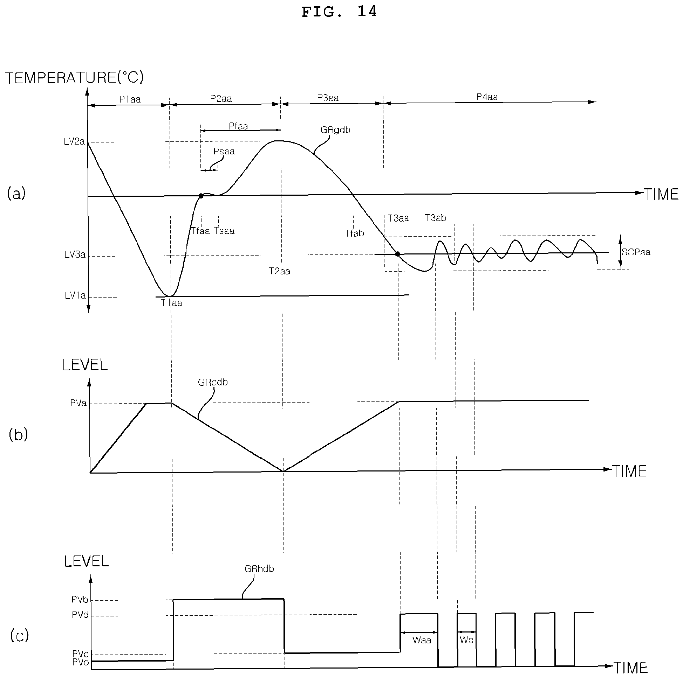

FIG. 14 illustrates further another example of a temperature graph GRgdc of the goods, a cold graph GRcdc corresponding to the temperature of the goods, and a heat graph GRhdc.

Referring to the drawing, as illustrated in (a) of FIG. 14, the temperature of the goods MAT may sequentially decrease in the first section P1aa, the temperature of the goods MAT may sequentially increase in the second section P2aa, the temperature of the goods MAT may decrease sequentially in the third section P3aa, and the temperature of the goods MAT may be maintained within a predetermined range SCPaa based on the third temperature T3aa in the fourth section P4aa.

The controller 310 may be configured to sequentially decrease the temperature of the goods MAT to the first temperature T1aa, which is the supercooling set temperature or the first target temperature, in the first section P1aa according to the first supercooling mode.

To this end, the controller 310 may be configured to supply cold into the cavity CAV in the first section P1aa, as illustrated in (b) of FIG. 14.

In particular, the controller 310 may control the cold supply device 180 to supply cold which sequentially increases to the intensity of PVa and maintains the intensity of PVa in the first section P1aa. Accordingly, the temperature of the goods MAT sequentially decreases to the first temperature T1aa.

Meanwhile, the controller 310 may be configured to supply heat having the intensity of PVc less than PVb into the cavity CAV as illustrated in (c) of FIG. 14 in the first section P1aa which is the first supercooling mode.

That is, the controller 310 may be configured to supply the heat having the intensity less than the intensity PVb of the heat in the second section P2aa to the cavity CAV in the first section P1aa. Accordingly, it is possible to stably maintain the supercooling in the first section P1aa.

Meanwhile, the controller 310 may determine that the supercooling is released when the temperature of the goods MAT decreases and then increases, and be configured to perform the thawing mode.

Accordingly, the controller 310 may be configured to sequentially decrease the cold supplied into the cavity CAV in the second section P2aa and is not supplied in a partial section, as illustrated in (b) of FIG. 14.

Moreover, the controller 310 may be configured to supply heat which sequentially increases from PVb to PVb and then maintains the intensity of PVb in the second section P2aa, as illustrated in (c) of FIG. 14. Accordingly, the temperature of the goods MAT sequentially increases to the second temperature T2aa.

For example, the controller 310 may be configured to supply the heat into the cavity CAV using the RF signal output by operating the RF output device 190a.

In particular, in the Pfaa section of the second section P2aa, the thawing may be performed, and in the Psaa section, a portion of the goods MAT may be in a slush state.

Meanwhile, when the temperature of the goods MAT increases and then decreases, the controller 310 may determine that the thawing is complete, and be configured to perform the second supercooling mode.

Next, the controller 310 may be configured to sequentially decrease the temperature of the goods MAT to the third temperature T3aa, which is the second target temperature, in the third section P3aa according to the second supercooling mode.

The third temperature T3aa may be a temperature higher than the first temperature T1aa and may correspond to the supercooling maintenance temperature rather than the supercooling release temperature.

To this end, the controller 310 may be configured to supply cold which sequentially increases to the intensity of PVa in the third section P3aa, as illustrated in (b) of FIG. 14. Accordingly, the temperature of the goods MAT sequentially decreases to the first temperature T1aa. Accordingly, it is possible to effectively supply the cold in the third sections P3aa which is the supercooling section.

Meanwhile, the controller 310 may be configured to supply heat which sequentially decreases from PVb to PVo and then maintain the intensity of PVo in the third section P3aa, as illustrated in (c) of FIG. 14.

In this case, the intensity of PVo may be less than that of PVc in the first section P1aa.

That is, the controller 310 may be configured to control the density of heat supplied in the third section P3aa to be less than the intensity of heat supplied in the first section P1aa.

The controller 310 may be configured to control the magnitude of the temperature change rate Slb of the goods MAT in the third section P3aa to be less than the magnitude of the temperature change rate Sla of the goods MAT in the first section P1aa.

Accordingly, the temperature of the goods MAT decreases gradually in the third section P3aa which is the second supercooling mode compared to in the first section P1aa which is the first supercooling mode.

Meanwhile, the controller 310 may be configured to control the intensity PVc of the heat in the third section P3aa to be less than the intensity PVb of the heat in the second section P2aa.

The controller 310 may be configured to maintain the temperature of the goods MAT within the predetermined range SCPaa based on the third temperature T3aa in the fourth section P4aa after the third section P3aa. Accordingly, it is possible to efficiently maintain the supercooling.

To this end, the controller 310 may be configured to supply cold having the intensity of PVa equal to PVa of the first section P1aa, as illustrated in (b) of FIG. 14, in the fourth section P4aa.

Meanwhile, during the fourth section P4aa, the controller 310 may be configured to supply the heat into the cavity CAV, and particularly, and supply heat having the intensity of PVo, as illustrated in (c) of FIG. 14. Accordingly, it is possible to efficiently maintain the supercooling.

FIGS. 15 to 20 are diagrams illustrating various examples of supercooling chambers according to an embodiment of present disclosure.

First, FIG. 15 is a diagram illustrating an example of the supercooling chamber OCRa disposed in the refrigerating compartment RMR.

Referring to the drawing, the supercooling chamber OCRa may include the cavity CAV which is disposed in the supercooling chamber OCRa and in which goods MAT are placed therein, the inlet temperature detector Tsi which detects the temperature of the inlet ILT of the cavity CAV, the outlet temperature detector Tso which detects the temperature of the outlet OLT of the cavity CAV, the cold supply device 180 which supplies or blocks the cold to the cavity CAV, and the heat supply device 190 which supplies or blocks the heat into the CAV. Accordingly, it is possible to efficiently maintain the supercooling using the RF signal without disposing a temperature detector in the cavity.

The cold supply device 180 may include the fan FAa disposed at the inlet ILT of the cavity CAV.

Meanwhile, the controller 310 may control the supply of cold supplied to the cavity CAV through on/off control of the fan FAa.

The heat supply device 190 may include the RF output device 190a which outputs the RF signal. In particular, an antenna (ANT) for outputting an RF signal may be disposed above the cavity CAV.

Meanwhile, the supercooling chamber OCRa may further include a partition wall BAR separating an inlet IOC of the supercooling chamber OCRa and an outlet OOC of the supercooling chamber OCRa.

Accordingly, the cold from the freezer compartment RMF does not flow from the inlet IOC of the supercooling chamber OCRa to the outlet OOC of the supercooling chamber OCRa.

The freezer compartment RMF may include a cold output device CSO, a damper DMP, a cold supply duct CSD, and a cold recovery duct CRD.

Here, the cold output device CSO may include a heat exchanger which is heat exchanged by driving a compressor, a fan that supplies cold which is heat exchanged in the heat exchanger, or a thermoelectric module.

The cold from the freezer compartment RMF is transferred to the inlet IOC in the supercooling chamber OCRa via the outlet ORF and cold supply duct CSD for cold output of the freezer compartment RMF.

The cold from the outlet OOC in the supercooling chamber OCRa is transferred to the cold recovery duct CRD and an inlet IRF for the cold input of the freezer compartment RMF.

The damper DMP may be disposed inside the supercooling chamber OCRa, unlike the drawing.

The supercooling chamber OCRa is insulated from the outside and is also preferably insulated from the inside cavity CAV. To this end, it is preferable that a heat insulating material is attached to the inner surface of the supercooling chamber OCRa.

Meanwhile, it is preferable that a heat insulating material is also attached to the inner surface of the cavity CAV.

Meanwhile, when the supercooling chamber OCRa is disposed in the refrigerating compartment RMR, the cold supply device 180 according to the embodiment of the present disclosure may further include the cold supply duct which supplies cold to the inlet IOC of the supercooling chamber OCRa, and the cold recovery duct CRD which is disposed in the freezer compartment RMF to recover the cold from the outlet OOC of the supercooling chamber OCRa.

Meanwhile, the cold supply device 180 according to the present disclosure may further include the damper DMP that is operated to supply cold to the cold supply duct CSD.

Meanwhile, the controller 310 may control the supply of the cold supplied to the supercooling chamber OCRa by controlling an opening rate of the damper DMP.

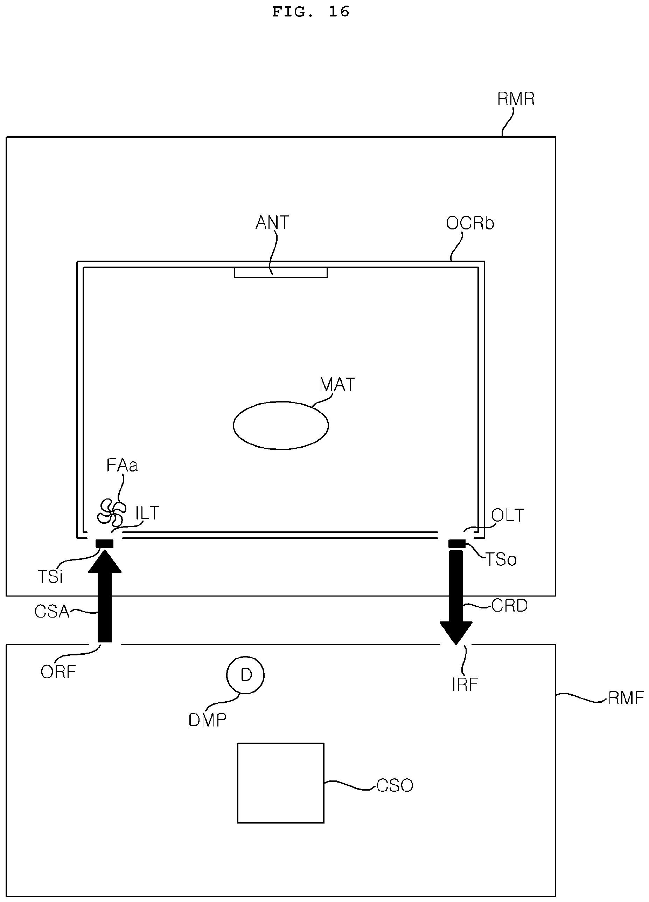

Next, FIG. 16 is a diagram illustrating another example of a supercooling chamber OCRb disposed in the refrigerating compartment RMR.

Referring to the drawings, unlike the supercooling chamber OCRa of FIG. 15, in the supercooling chamber OCRb of FIG. 16, the partition wall BAR and the like are not disclosed.

Referring to the drawing, the supercooling chamber OCRb may include the cavity CAV which is disposed in the supercooling chamber OCRb and in which goods MAT are placed therein, the inlet temperature detector Tsi which detects the temperature of the inlet ILT of the cavity CAV, and the outlet temperature detector Tso which detects the temperature of the outlet OLT of the cavity CAV.

Meanwhile, since a space between the supercooling chamber OCRb and the cavity CAV is insufficient compared to FIG. 15, the fan FAa may be disposed inside the cavity CAV.

Moreover, the inlet and outlet of the cavity CAV may be used as the inlet and outlet of the supercooling chamber OCRb.

Accordingly, the cold from the freezer compartment RMF is transferred to the inlet ILT of the cavity CAV via the outlet ORF and cold supply duct CSD for cold output of the freezer compartment RMF.

Meanwhile, the cold from the outlet OLT of the cavity CAV is transferred to the cold recovery duct CRD and the inlet IRF for the cold input of the freezer compartment RMF.

Meanwhile, the controller 310 may control the supply of cold supplied to the supercooling chamber OCRb by controlling the opening rate of the damper DMP.

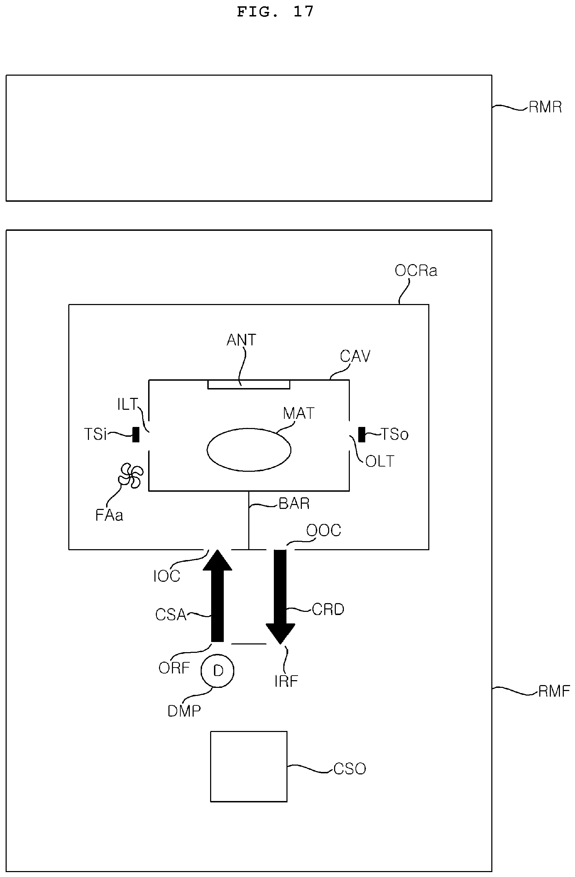

Next, FIG. 17 is a diagram illustrating an example of the supercooling chamber OCRa disposed in a freezer compartment RMF.

Referring to the drawing, the supercooling chamber OCRa may include the cavity CAV which is disposed in the supercooling chamber OCRa and in which the goods MAT are placed therein, the inlet temperature detector Tsi which detects the temperature of the inlet ILT of the cavity CAV, the outlet temperature detector Tso which detects the temperature of the outlet OLT of the cavity CAV, the cold supply device 180 which supplies or blocks the cold to the cavity CAV, and the heat supply device 190 which supplies or blocks the heat into the CAV. Accordingly, it is possible to efficiently maintain the supercooling using the RF signal without disposing a temperature detector in the cavity.

The cold supply device 180 may include the fan FAa disposed at the inlet ILT of the cavity CAV.

Meanwhile, the controller 310 may control the supply of cold supplied to the cavity CAV through on/off control of the fan FAa.

The heat supply device 190 may include the RF output device 190a that outputs the RF signal. In particular, an antenna (ANT) for outputting the RF signal may be disposed above the cavity CAV.

Meanwhile, the supercooling chamber OCRa may further include the partition wall BAR separating the inlet IOC of the supercooling chamber OCRa and the outlet OOC of the supercooling chamber OCRa.

Accordingly, the cold from the freezer compartment RMF does not flow from the inlet IOC of the supercooling chamber OCRa to the outlet OOC of the supercooling chamber OCRa.

The freezer compartment RMF may include the cold output device CSO, the damper DMP, the cold supply duct CSD, and the cold recovery duct CRD.

Here, the cold output device CSO may include a heat exchanger which is heat exchanged by driving a compressor, a fan that supplies cold which is heat exchanged in the heat exchanger, or a thermoelectric module.

The cold from the cold output device CSO and the damper DMP is transferred to the inlet IOC in the supercooling chamber OCRa via the cold supply duct CSD.

The cold from the outlet OOC in the supercooling chamber OCRa is transferred to the inside of the freezer compartment RMF through the cold recovery duct CRD.

The damper DMP may be disposed inside the supercooling chamber OCRa, unlike the drawing.

The supercooling chamber OCRa is insulated from the outside and is also preferably insulated from the inside cavity CAV. To this end, it is preferable that a heat insulating material is attached to the inner surface of the supercooling chamber OCRa.

Meanwhile, it is preferable that a heat insulating material is also attached to the inner surface of the cavity CAV.

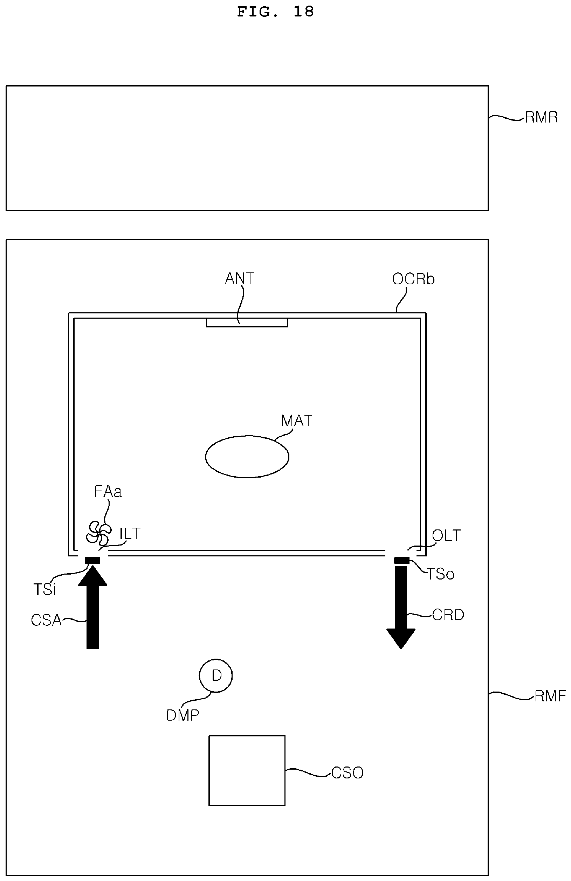

Next, FIG. 18 is a diagram illustrating another example of the supercooling chamber OCRa disposed in the freezer compartment RMF.

Referring to the drawings, unlike the supercooling chamber OCRa of FIG. 17, in the supercooling chamber OCRb of FIG. 18, the partition wall BAR and the like are not disclosed.

Referring to the drawing, the supercooling chamber OCRb may include the cavity CAV which is disposed in the supercooling chamber OCRb and in which the goods MAT are placed therein, the inlet temperature detector Tsi which detects the temperature of the inlet ILT of the cavity CAV, and the outlet temperature detector Tso which detects the temperature of the outlet OLT of the cavity CAV.

Meanwhile, since the space between the supercooling chamber OCRb and the cavity CAV is insufficient compared to FIG. 17, the fan FAa may be disposed inside the cavity CAV.

Moreover, the inlet and outlet of the cavity CAV may be used as the inlet and outlet of the supercooling chamber OCRb.

Accordingly, the cold from the cold output device CS0 and the damper DMP is transferred to the inlet ILT of the cavity CAV via the outlet ORF and cold supply duct CSD for cold output of the freezer compartment RMF.

Meanwhile, the cold from the outlet OLT of the cavity CAV is transferred to the freezer compartment RMF through the cold recovery duct CRD.

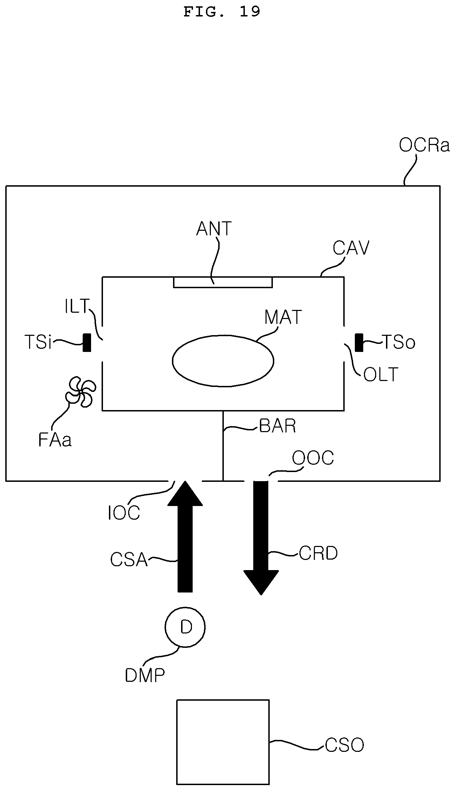

FIG. 19 is a diagram illustrating an example of the supercooling chamber OCRa according to an embodiment of present disclosure.

Referring to the drawing, the supercooling chamber OCRa according to the embodiment of the present disclosure may be provided in the refrigerator 100 as a separate module, not provided in the refrigerating compartment or freezer compartment.

Referring to the drawing, similar to FIG. 15 or 17, the supercooling chamber OCRa may include the cavity CAV which is disposed in the supercooling chamber OCRa and in which the goods MAT are placed therein, the inlet temperature detector Tsi which detects the temperature of the inlet ILT of the cavity CAV, the outlet temperature detector Tso which detects the temperature of the outlet OLT of the cavity CAV, the cold supply device 180 which supplies or blocks the cold to the cavity CAV, and the heat supply device 190 which supplies or blocks the heat into the CAV. Accordingly, it is possible to efficiently maintain the supercooling using the RF signal without disposing a temperature detector in the cavity.

The cold supply device 180 may include the fan FAa disposed at the inlet ILT of the cavity CAV.

Meanwhile, the controller 310 may control the supply of cold supplied to the cavity CAV through on/off control of the fan FAa.

The heat supply device 190 may include an RF output device 190a that outputs an RF signal. In particular, the antenna (ANT) for outputting the RF signal may be disposed above the cavity CAV.

Meanwhile, the supercooling chamber OCRa may further include the partition wall BAR separating the inlet IOC of the supercooling chamber OCRa and the outlet OOC of the supercooling chamber OCRa.

Accordingly, the cold from the freezer compartment RMF does not flow from the inlet IOC of the supercooling chamber OCRa to the outlet OOC of the supercooling chamber OCRa.

Meanwhile, the cold from the cold output device CSO and the damper DMP is transferred to the inlet IOC in the supercooling chamber OCRa via the cold supply duct CSD.

The cold from the outlet OOC in the supercooling chamber OCRa is transferred to the inside of the freezer compartment RMF through the cold recovery duct CRD.

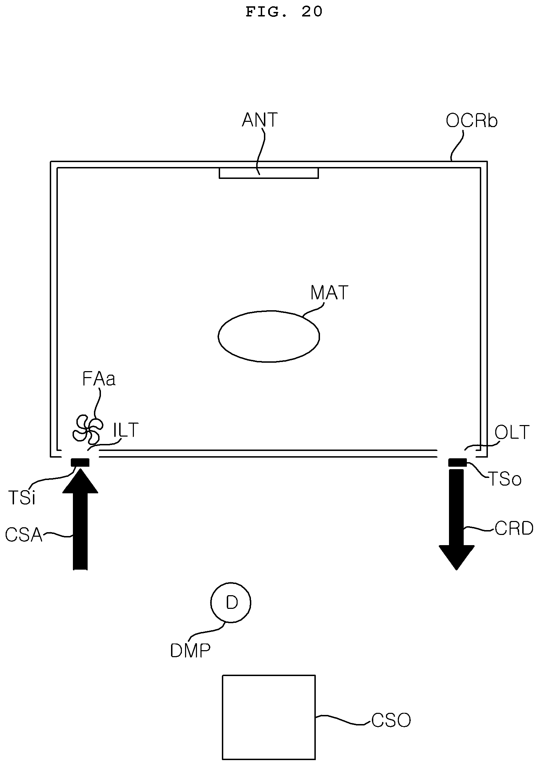

FIG. 20 is a diagram illustrating another example of the supercooling chamber OCRb according to an embodiment of present disclosure.

Referring to the drawings, the supercooling chamber OCRb according to the embodiment of the present disclosure may be provided in the refrigerator 100 as a separate module, not provided in the refrigerating compartment or freezer compartment.

Referring to the drawings, unlike the supercooling chamber OCRa of FIG. 19, in the supercooling chamber OCRb of FIG. 20, the partition wall BAR and the like are not disclosed.

Referring to the drawing, the supercooling chamber OCRb may include the cavity CAV which is disposed in the supercooling chamber OCRb and in which goods MAT are placed therein, the inlet temperature detector Tsi which detects the temperature of the inlet ILT of the cavity CAV, and the outlet temperature detector Tso which detects the temperature of the outlet OLT of the cavity CAV.

Meanwhile, since the space between the supercooling chamber OCRb and the cavity CAV is insufficient compared to FIG. 17, the fan FAa may be disposed inside the cavity CAV.

Moreover, the inlet and outlet of the cavity CAV may be used as the inlet and outlet of the supercooling chamber OCRb.

Accordingly, the cold from the cold output device CSO and the damper DMP is transferred to the inlet ILT of the cavity CAV via the outlet ORF and cold supply duct CSD for cold output of the freezer compartment RMF.

Meanwhile, the cold from the outlet OLT of the cavity CAV is transferred to the freezer compartment RMF via the cold recovery duct CRD.

Meanwhile, the supercooling control method described in FIGS. 9 to 15 may be applied to the structures of various supercooling chambers of FIGS. 15 to 20.

The refrigerators according to present disclosure are not limitedly applicable to the configurations and methods of the above-described embodiments, but the above embodiments may be configured by selectively combining all or some of each of the embodiments so that various modifications can be made.

In addition, although preferred embodiments of the present disclosure have been illustrated and described above, the present disclosure is not limited to the specific embodiments described above, and of course, various modifications can be made by those skilled in the art to which the invention belongs without departing from the gist of the present disclosure claimed in claims, and these modifications should not be individually understood from the technical idea or prospect of the present disclosure.

The present disclosure is applicable to refrigerators, and in particular, to refrigerators capable of efficiently supplying cold or heat until reaching the supercooling maintaining section.

## Claims

1. A refrigerator comprising:
a first storage compartment in which goods are stored;
a cavity disposed inside the first storage compartment;
a heat source configured to supply heat into the cavity;
a cold source configured to supply cold into the cavity;
a water molecule freezing preventing device configured to prevent freezing of water contained in the goods; and
a controller configured to control an output of at least one of the heat source, the cold source, or the water molecule freezing preventing device,
wherein the controller is configured to perform :
a first operation step to operate based on the first notch temperature for a cooling operation of the first storage compartment,
a second operation step to operate based on a second notch temperature for a heating operation of the first storage compartment, and
a third operation step to operate based on a third notch temperature for the cooling operation of the first storage compartment, and
wherein the second notch temperature is higher than 0°C, and cold in the first storage compartment increases in the first operation step and the third operation step and the cold decreases in the second operation step.

2. The refrigerator of claim 1, wherein the cold source includes:
an evaporator configured to perform heat exchange using a refrigerant compressed by a compressor, and
a fan operated to supply cold generated by the heat exchange in the evaporator to the first storage compartment.

3. The refrigerator of claim 1, wherein the cold source further includes:
a thermoelectric element, and
a fan operated to supply cold generated by heat exchange on a heat absorption surface of the thermoelectric element to the cavity.

4. The refrigerator of claim 1, wherein the water molecule freezing preventing device includes at least one of an RF output device, an electric field output device, a magnetic field output device, and a ultrasound output device.

5. The refrigerator of claim 1, wherein an operation mode of the first storage compartment is changed, and
wherein the operation mode may includes at least one of a refrigerating operation mode, a supercooling operation mode, or a thawing mode.

6. The refrigerator of claim 5, wherein a notch temperature of the first storage compartment in the refrigerating operation mode is higher than a notch temperature of the first storage compartment in the supercooling operation mode.

7. The refrigerator of claim 5, wherein a notch temperature of the first storage compartment in the refrigerating operation mode is lower than a notch temperature of the first storage compartment in a heating operation mode.

8. The refrigerator of claim 1, further comprising a second storage compartment disposed outside the first storage compartment.

9. The refrigerator of claim 8, wherein a notch temperature of the second storage chamber is higher than the notch temperature for the cooling operation of the first storage chamber.

10. The refrigerator of claim 1 or 8, further comprising a third storage compartment,
wherein a notch temperature for the third storage compartment is lower than a notch temperature for a cooling operation of the first storage compartment.

11. The refrigerator of claim 1, wherein the controller is configured to control an output of the water molecule freezing preventing device during execution of the second operation step to be greater than an output of the water molecule freezing preventing device during execution of the first operation step.

12. The refrigerator of claim 1, wherein the controller is configured to control an output of the water molecule freezing preventing device during execution of the third operation step to be equal to or greater than an output the water molecule freezing preventing device during execution of the first operation step.

13. The refrigerator of claim 1, wherein the controller is configured to further perform a fourth operation step operated based on a fourth notch temperature for the heating operation of the first storage compartment.

14. The refrigerator of claim 13, wherein the fourth notch temperature is higher than 0°C.

15. The refrigerator of claim 1, wherein the controller is configured to control the fourth notch temperature to be higher than the second notch temperature when a time elapsed from a time when an operation start condition of the second operation step is satisfied to a time when an operation end condition of the second operation step is satisfied exceeds a predetermined range.

16. The refrigerator of claim 1, wherein the controller is configured to control the fourth notch temperature to be equal to the second notch temperature when the first operation when a time elapsed from a time when an operation start condition of the second operation step is satisfied to a time when an operation end condition of the second operation step is satisfied is within a predetermined range.

17. The refrigerator of claim 1, wherein the controller is configured to control the fourth notch temperature to be lower than the second notch temperature when a time elapsed from a time when an operation start condition of the second operation step is satisfied to a time when an operation end condition of the second operation step is satisfied is less than a predetermined range.

18. The refrigerator of claim 1, wherein the controller is configured to control the fourth notch temperature to be higher than the second notch temperature when a temperature of the first storage compartment exceeds a predetermined range from a time when an operation start condition of the second operation step is satisfied to a time when an operation end condition of the second operation step is satisfied.

19. The refrigerator of claim 1, wherein the controller is configured to control the fourth notch temperature to be equal to the second notch temperature when a temperature of the first storage compartment is within a predetermined range from a time when an operation start condition of the second operation step is satisfied to a time when an operation end condition of the second operation step is satisfied.

20. The refrigerator of claim 1, wherein the controller is configured to control the fourth notch temperature to be lower than the second notch temperature when a temperature of the first storage compartment is less than a predetermined range from a time when an operation start condition of the second operation step is satisfied to a time when an operation end condition of the second operation step is satisfied.
